(19) Europäisches Patentamt

European Patent Office

Office européen des brevets

(11) **EP 1 672 846 A1**

(12) **DEMANDE DE BREVET EUROPEEN**

(43) Date de publication:
   **21.06.2006 Bulletin 2006/25**

(51) Int Cl.:
   **H04L 12/28** (2006.01)   **H04Q 7/38** (2006.01)

(21) Numéro de dépôt: **05292734.0**

(22) Date de dépôt: **19.12.2005**

(84) Etats contractants désignés:
   **AT BE BG CH CY CZ DE DK EE ES FI FR GB GR HU IE IS IT LI LT LU LV MC NL PL PT RO SE SI SK TR**
   Etats d'extension désignés:
   **AL BA HR MK YU**

(30) Priorité: **20.12.2004 FR 0413604**

(71) Demandeur: **FRANCE TELECOM
   75015 Paris (FR)**

(72) Inventeurs:
   • **Codaccioni, Yann
      75020 Paris (FR)**
   • **Mathoorasing, Dean
      92130 Issy les Moulineaux (FR)**

(74) Mandataire: **Habasque, Etienne J. Jean-François
   Cabinet Lavoix
   2, Place d'Estienne d'Orves
   75441 Paris Cédex 09 (FR)**

(54) **Gestion des ressources d'un réseau mobile large bande**

(57) L'invention concerne un procédé de gestion des ressources d'un réseau mobile à large bande comportant des bornes d'accès radio ($BA_i$) et un serveur d'accès à large bande (BAS). Sur transmission d'une requête d'accès ra_A (.) pour connexion par un terminal mobile utilisateur candidat ($TU_c$) vers une borne d'accès spécifique ($BA_s$), on discrimine (A) le niveau de puissance radio électrique reçu par ($TU_c$), les identifiants réseau ($IDTU_c$) de ce dernier et l'application ($RA_c$) demandée, à partir de ra_A (.), on compare (B) les identifiants réseau ($IDTU_c$) à des identifiants de référence ($IDTU_R$) pour contrôle d'accès et on discrimine à partir d'une liste de bornes d'accès radio éligibles comprenant la borne ($BA_s$) et au moins une borne d'accès radio voisine, $LBA_e = [BAs:LBAv]$ une borne d'accès radio candidate $BA_c = BAx ; x \in [s,v]$ en fonction de la localisation de $TU_c$ vis-à-vis de ($BA_s$), de la charge en débit de chaque borne et de l'application demandée ($RA_c$). Application à des bornes radio WIFI, Hotspots ou analogues.

*FIG.2b*

EP 1 672 846 A1

## Description

A l'heure actuelle, la technologie WLAN pour Wireless Local Area Network en anglais, réseau local sans fil, est de plus en plus utilisée en couplage soit avec le réseau ADSL pour Asymetric Digital Subscriber Line en anglais, ligne d'abonné numérique à débit asymétrique, soit avec le réseau d'accès satellite, ou encore avec la boucle locale radio, BLR, éventuellement avec le réseau FTTH/C, pour Fiber to the Home or Curb en anglais, fibre optique jusqu'au domicile.

Le WLAN représente alors une extension radio d'un réseau déjà existant, lequel n'est pas nécessairement un réseau radio mais un réseau TCP/IP par exemple.

Ainsi, au moyen des extensions radio précitées, on permet à une pluralité d'utilisateurs distincts d'accéder au même point d'accès du réseau déjà existant.

Le fait de l'existence de plusieurs utilisateurs sur un même point d'accès nécessite alors de faire appel à la gestion des ressources du réseau. Toutefois, les procédures de partage des ressources réseau existantes diffèrent alors suivant les types d'accès disponibles.

Dans le cas des réseaux ADSL, il existe dans le système d'information des équipements spécifiques, tels que le PAS, Passerelle d'Accès aux Services située dans le plan ou équipement de commande, permettant de centraliser un certain nombre d'informations relatives aux sessions des utilisateurs du réseau.

Par exemple le SPI, Serveur de Profil Internet, est un module additionnel au PAS. Ce module permet d'associer le terminal d'un client à l'offre réseau aux conditions d'accès que ce dernier a souscrites. Le SPI est construit autour d'une base de données contenant une liste des terminaux clients ADSL, des conditions d'accès réseau auxquelles ces derniers ont souscrit et des FAI Fournisseurs d'Accès Internet autorisés. La base de données du SPI est alimentée et mise à jour à partir des informations du Système d'Information selon un protocole FTP, pour File Transfer Protocol, une fois par jour. Pour ce qui est du comptage des unités de communication consommées, le PAS stocke dans une table de sa base de données les tickets de comptage qu'il a reçus du BAS, Serveur d'Accès à Large Bande.

Dans le cadre de la technologie ADSL, aujourd'hui, plusieurs terminaux mobiles ou fixes utilisateur peuvent se connecter simultanément sur un même point d'accès à une et une seule ligne ADSL. Ces utilisateurs utilisent un même abonnement, définissant les conditions d'accès, celui du terminal utilisateur ayant souscrit ce dernier.

En particulier, quels que soient ces abonnements, et les conditions d'accès y relatives, le partage des ressources de transmission d'une ligne ADSL est effectué de manière équitable entre tous les terminaux utilisateurs.

Du point de vue du contrôle du réseau, authentification, autorisation et comptage des accès et transactions, ce contrôle est effectué comme s'il n'existait qu'un utilisateur unique.

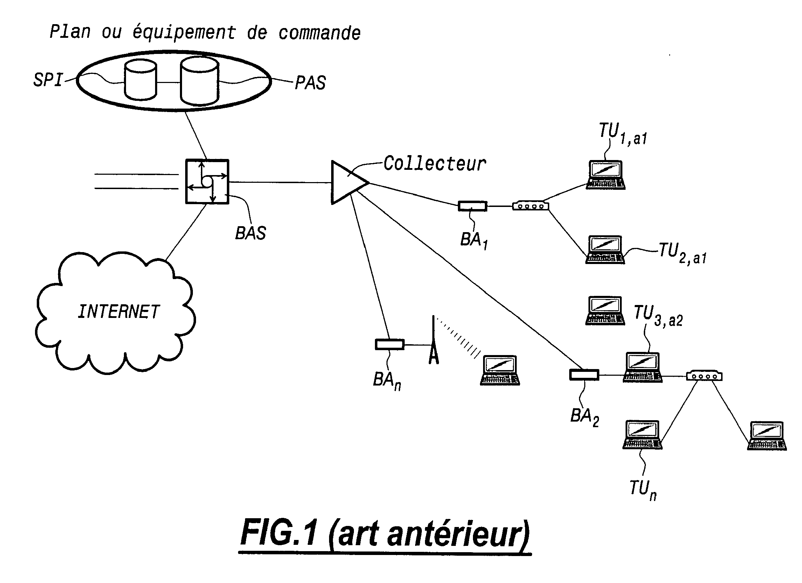

A titre d'exemple non limitatif, en référence à la figure 1, sur la borne d'accès, $BA_1$, le terminal utilisateur, $TU_1$, et le terminal utilisateur, $TU_2$, ont monté chacun une session. Ces derniers ont été authentifiés avec le même identifiant. Les terminaux utilisateur précités se partagent la bande passante fournie par l'abonnement, $A_1$, et les conditions d'accès réseau correspondantes.

De même sur la borne d'accès, $BA_2$, seul le terminal utilisateur $TU_3$ s'est authentifié. Les terminaux utilisateur $TU_4$ et $TU_5$, utilisent la même session que le terminal utilisateur $TU_3$. La bande passante fournie par l'abonnement, $A_3$, est partagée entre les différents terminaux utilisateur connectés.

Dans le cas de réseau de type Hotspots, réseau de type WIFI, plusieurs terminaux utilisateur peuvent accéder, en technologie WIFI, au réseau à partir d'un même point d'accès mais avec des abonnements, et donc des conditions d'accès réseau, différents.

Au niveau des ressources, le point d'accès, accès ADSL, liaison louée ou autre, est partagé de manière équitable entre tous les terminaux utilisateur connectés.

Toutefois, la société CISCO a développé un système appelé CMX, pour Cisco Mobile exchange, lequel dispose de certaines fonctionnalités de répartition et de partage des ressources réseau. Il est par exemple possible d'instaurer des règles permettant de router des flux de données en fonction de la nature du service ou application demandée, application temps réel telle que communication vocale VOIP sur INTERNET ou application non temps réel, telle que transmission de données. Le système précité nécessite des aménagements importants dans le réseau d'accès.

Les réseaux fixes ADSL et les réseaux de type Hotspots, connus de l'état de la technique, présentent les inconvénients ou limitations ci-après.

Pour les réseaux fixes de type ADSL, l'opérateur ne dispose pas d'informations relatives à la capacité et aux ressources du réseau. Jusqu'à l'heure, il n'existait pas de besoin correspondant, car le réseau est dimensionné de façon à répondre au besoin de chaque terminal utilisateur. En rajoutant comme extensions au réseau fixe ADSL des bornes d'accès radio, telles que des bornes WIFI, on ne dispose toujours pas des informations complètes pour que la base réseau puisse permettre de gérer les ressources de transmission d'un réseau mobile large bande à petites cellules. La petite taille des cellules résulte directement des caractéristiques techniques des bornes WIFI et de la réglementation y relative.

En effet, les paramètres nécessaires pour constituer un réseau mobile large bande comportant des accès fixes prolongés par des bornes d'accès de réseau local sans fil, bornes d'accès WIFI, sont notamment des informations spécifiques relatives au taux d'occupation des bornes d'accès radio, aux bornes d'accès radio accessibles par un terminal mobile utilisateur, à la puissance de réception des terminaux utilisateurs, à la localisation relative des utilisateurs, par exemple.

En conséquence, il n'est aucunement envisageable de mettre en oeuvre une gestion dynamique des ressources réseau, afin de pouvoir optimiser ces dernières. Une seule offre ou condition d'accès au réseau est mise en oeuvre sur une même borne d'accès radio. Par voie de conséquence, les ressources réseau ne sont pas optimisées, les flux de données étant traités du point de vue des ressources réseau de manière identique, indépendamment de l'application temps réel ou non temps réel. Une adéquation entre l'allocation de ressource réseau et les caractéristiques intrinsèques de tel ou tel terminal utilisateur ne peut être envisagée.

Pour les réseaux de type Hotspots, les ressources réseau sont simplement partagées entre les différents utilisateurs de manière équitable. Bien que la notion de partage équitable puisse recouvrir une répartition relative des ressources réseau, il n'est cependant pas possible d'allouer plus ou moins de ressources réseau à tel ou tel terminal utilisateur.

Pour les réseaux CMX de la société CISCO, il n'existe pas, à proprement parler, de processus de répartition des ressources réseau entre les terminaux utilisateur connectés à une même borne d'accès radio. De plus, cette solution nécessite un investissement supplémentaire important, ainsi que des modifications au niveau du réseau d'accès.

La présente invention a pour objet de remédier aux inconvénients et limitations des réseaux fixes ADSL et/ou Hotspots de l'art antérieur, afin d'en améliorer de façon sensible les qualités et possibilités fonctionnelles.

En particulier, un objet plus spécifique de la présente invention est la mise en oeuvre d'un protocole et d'un système de gestion des ressources d'un réseau mobile large bande, comportant des accès fixes prolongés par des bornes d'accès de réseau local sans fil, et donc basé sur l'utilisation de bornes radio, de type WIFI, WIMAX ou autres, et opérant comme extensions d'un autre réseau d'accès, afin de permettre à plusieurs abonnés d'accéder de façon simultanée, à des applications ou services différents, applications temps réel et/ou non temps réel, en effectuant un contrôle adapté des ressources réseau. On rappelle que la notion de réseau mobile large bande recouvre tout réseau mobile permettant l'accession à des applications temps réel, telles que la transmission de communications vocales, consommant une large bande passante ou à des applications non temps réel, telles que la transmission de données par paquets à consommation plus restreinte.

Ce but est atteint en introduisant une discrimination conditionnelle d'au moins une borne d'accès radio candidate sur critère de localisation du terminal mobile utilisateur, de charge en débit de trafic des bornes d'accès radio et du type d'application requis, et en instaurant des règles de priorité dynamique relative des flux de données, en fonction des conditions d'accès au réseau disponibles et des différentes applications demandées et/ou exécutées.

Un autre objet de la présente invention est également, grâce à la mise en oeuvre de la gestion des ressources réseau précitée et d'instauration des règles de priorité dynamique relative du flux de données, l'obtention d'une optimisation de l'utilisation du réseau d'accès à l'application demandée, tout en maintenant une qualité de service de transmission et d'accès aux applications demandées suffisante pour tous les terminaux utilisateurs.

Un autre objet de la présente invention est, en conséquence, la mise en oeuvre d'un système centralisé de gestion des ressources d'un réseau mobile large bande comportant au moins des accès fixes prolongés par un ensemble de bornes d'accès radio de réseau local sans fil, un serveur d'accès à large bande, et des modules décisionnels recevant, en paramètres d'entrée, les informations réseau récupérées et acheminées par ce réseau. Les résultats décisionnels de ces modules décisionnels permettent de manière dynamique :

- une répartition de la charge du réseau, par borne d'accès radio, telle que par exemple un modem XDSL Radio ;
- une optimisation des ressources réseau ;
- une optimisation de la qualité de service (QoS) fournie aux terminaux utilisateurs ; et
- une optimisation du partage des ressources au niveau de chaque borne d'accès radio.
  Le protocole et le système de gestion des ressources d'un réseau mobile large bande comportant au moins des accès fixes prolongés par un ensemble de bornes d'accès radio de réseau local sans fil et un serveur d'accès à large bande, objets de la présente invention, sont remarquables en ce que ce protocole consiste au moins à et ce système permet au moins de, sur transmission d'une requête d'accès à une application transmise par un terminal mobile utilisateur candidat vers une borne d'accès radio spécifique, en vue de la connexion de ce terminal mobile utilisateur candidat à cette borne d'accès radio spécifique, discriminer, d'une part le niveau de puissance radioélectrique du signal reçu du terminal mobile utilisateur candidat, et, d'autre part, les identifiants réseau du terminal mobile utilisateur candidat et de l'application demandée, à partir de cette requête d'accès, comparer les identifiants réseau discriminés à des identifiants de référence pour assurer un contrôle d'accès à ce réseau mobile large bande et, sur réponse positive à cette opération de comparaison, discriminer à partir d'une liste de référence comportant cette borne d'accès radio spécifique et au moins une borne d'accès radio voisine à cette borne d'accès radio spécifique, choisies parmi cet ensemble de bornes d'accès radio, en fonction de la localisation de ce terminal mobile utilisateur candidat vis-à-vis de cette borne d'accès radio spécifique, de la charge en débit de trafic de chaque borne d'accès radio de cet ensemble de borne d'accès radio et du type d'application requise, une borne d'accès radio candidate à la transmission de cette requête d'accès et à l'exécution de cette application, au bénéfice de ce terminal mobile utilisateur candidat, par l'intermédiaire de ce serveur d'accès à large bande.

Le protocole et le système de gestion des ressources d'un réseau mobile large bande, objets de l'invention, trouvent application à la transmission et à l'exécution d'applications temps réel et/ou non temps réel par des terminaux mobiles disposant d'une liaison en réseau TCP/IP par accès fixes prolongés par des bornes d'accès de réseau local sans fil.

Ils seront mieux compris à la lecture de la description et à l'observation des dessins ci-après dans lesquels, outre la figure 1 relative à l'art antérieur,

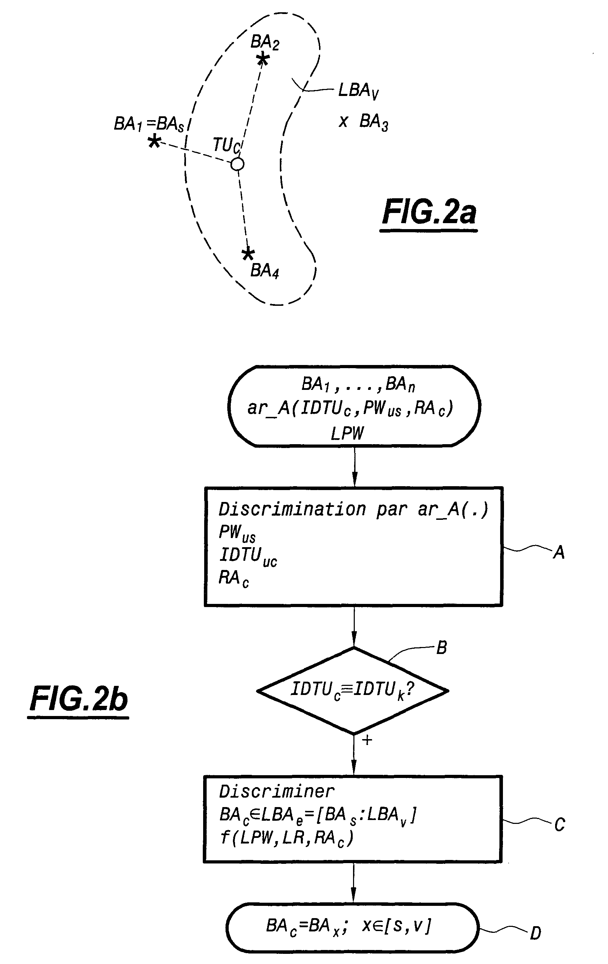

- la figure 2a représente, à tire illustratif, un terminal utilisateur candidat à la transmission d'une requête d'accès à et à l'exécution d'une application transmise par l'une des bornes d'accès radio d'un ensemble de bornes d'accès radio constitutives d'un réseau local sans fil, accès fixes prolongés d'un réseau mobile large bande, conforme à l'objet de la présente invention ;
- la figure 2b représente, à titre illustratif, un organigramme de mise en oeuvre du procédé objet de l'invention dans le cadre non limitatif de la situation illustrée en figure 2a ;

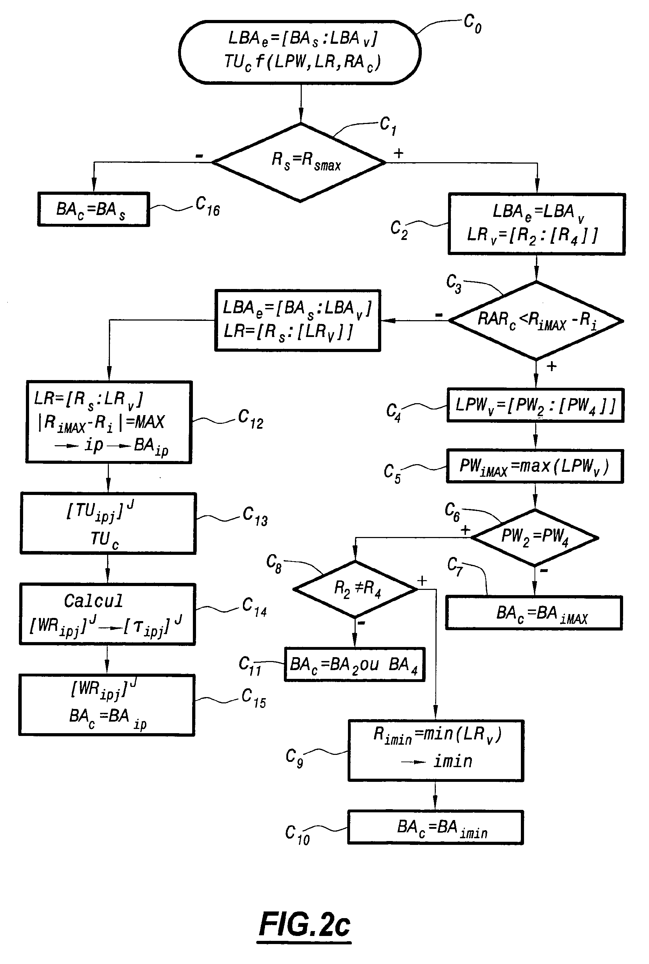

- la figure 2c représente, à titre illustratif, un exemple non limitatif de processus de discrimination d'une borne d'accès radio candidate à la transmission et à l'exécution d'une requête d'accès à une application au bénéfice d'un terminal mobile utilisateur candidat, permettant de manière avantageuse non limitative la mise en oeuvre du procédé objet de la présente invention ;

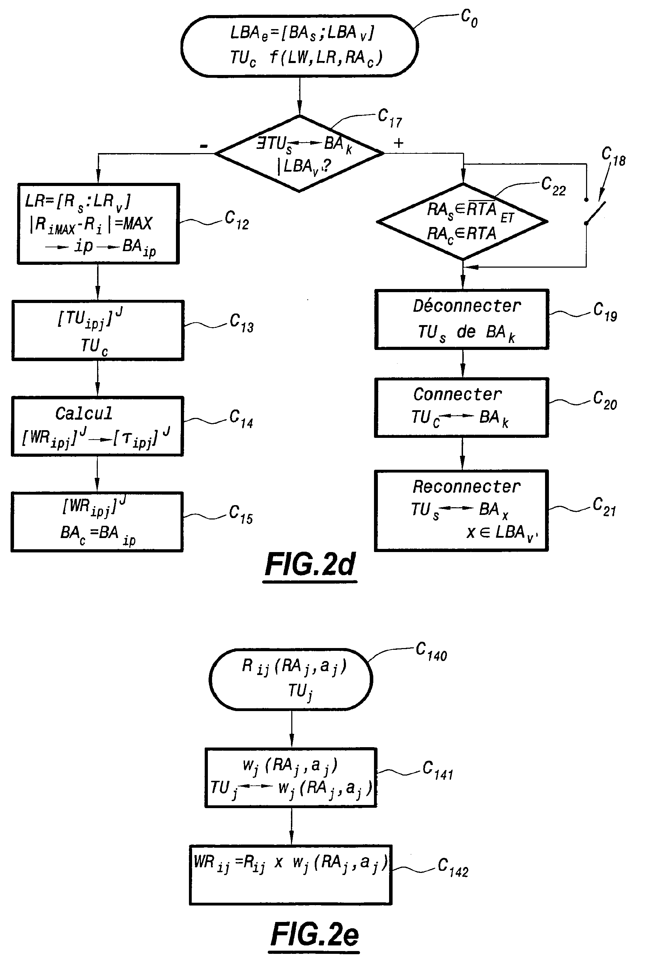

- la figure 2d représente, à titre purement illustratif, une variante avantageuse de mise en oeuvre du processus de discrimination d'une borne d'accès radio candidate illustré en figure 2c ;
- la figure 2e représente, à titre purement illustratif, un processus de calcul et d'allocation de débit de trafic pondéré à tout terminal utilisateur connecté à une borne d'accès radio dont le débit instantané, relatif à une pluralité de terminaux utilisateur connectés à cette dernière, est sensiblement égal au débit maximum admissible, le cas échéant, inférieur à ce dernier, mais en tout état de cause, trop important pour autoriser la transmission d'une requête d'accès à et l'exécution d'une application au bénéfice d'un terminal utilisateur candidat quelconque, non encore connecté à ladite borne d'accès radio ;

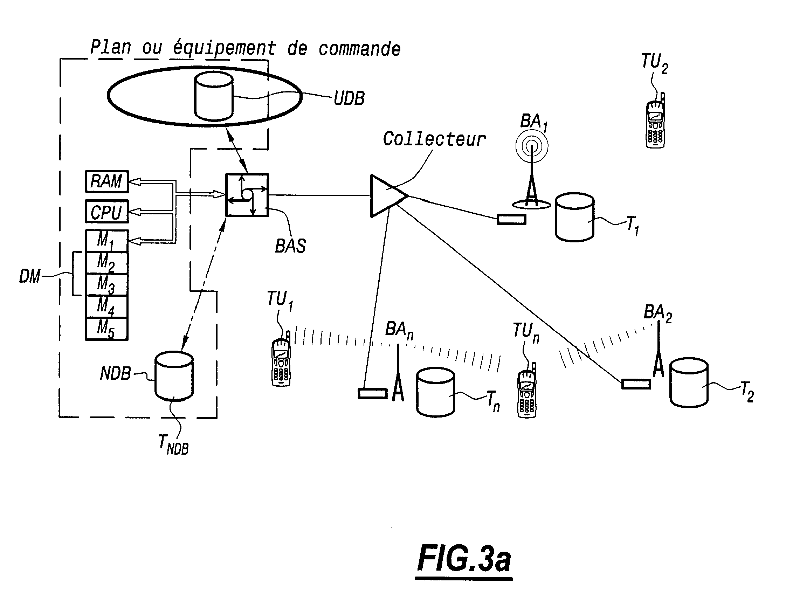

- la figure 3a représente, à titre d'exemple non limitatif, l'architecture d'un système de gestion des ressources d'un réseau mobile large bande comportant des accès fixes prolongés par des bornes d'accès de réseau local sans fil, conforme à l'objet de la présente invention ;

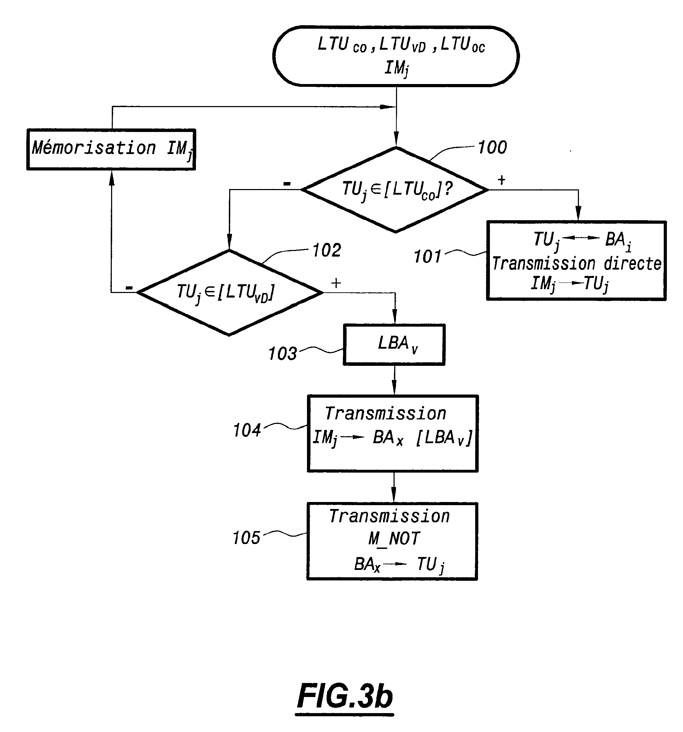

- la figure 3b représente, à titre illustratif, un organigramme du protocole de transmission bidirectionnelle de messages d'information entre la base de données réseau et l'une des bornes d'accès radio constitutives du système de gestion de ressources d'un réseau mobile large bande objet de la présente invention ;

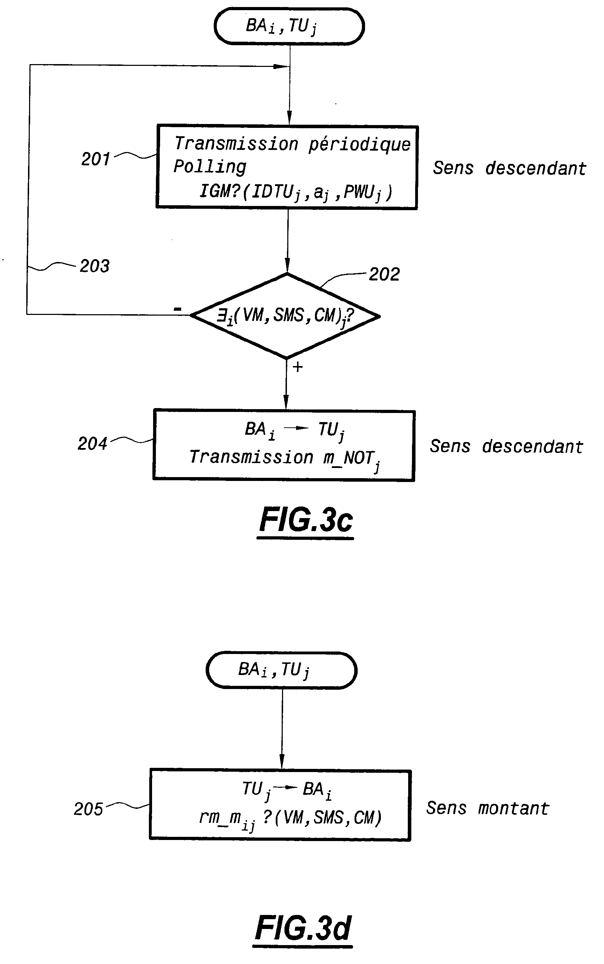

- la figure 3c représente, à titre illustratif, un organigramme du protocole de transmission de messages d'information dans le sens descendant entre une borne d'accès radio, constitutive du réseau mobile à large bande, et un terminal utilisateur ;
- la figure 3d représente, à titre illustratif, un organigramme du protocole de transmission de messages d'information dans le sens montant entre un terminal utilisateur et une borne d'accès radio constitutive du réseau mobile à large bande ;

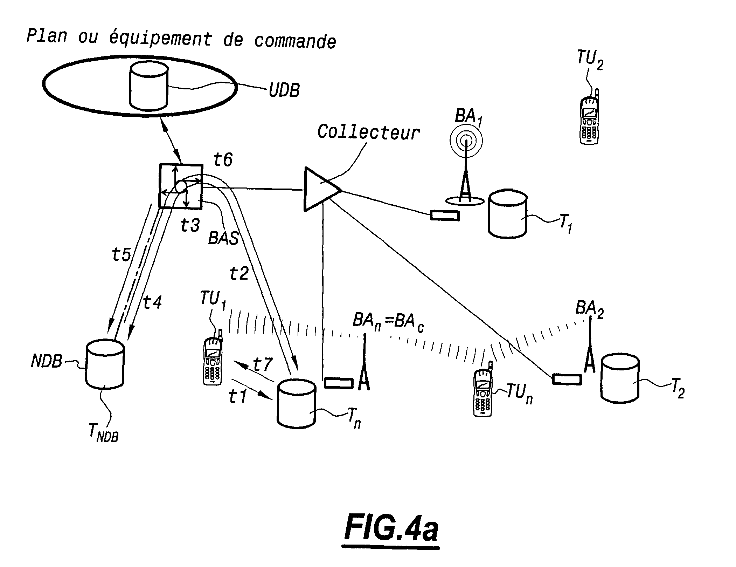

- la figure 4a représente, à titre illustratif, un diagramme spatio-temporel d'un protocole de connexion d'un terminal mobile utilisateur à la borne d'accès radio d'un réseau mobile à large bande équipé d'un système de gestion des ressources de ce réseau mobile à large bande conforme à l'objet de l'invention, tel que décrit en liaison avec les figures 3a à 3c, lorsque ce terminal utilisateur est en mode connecté à cette borne d'accès radio ;

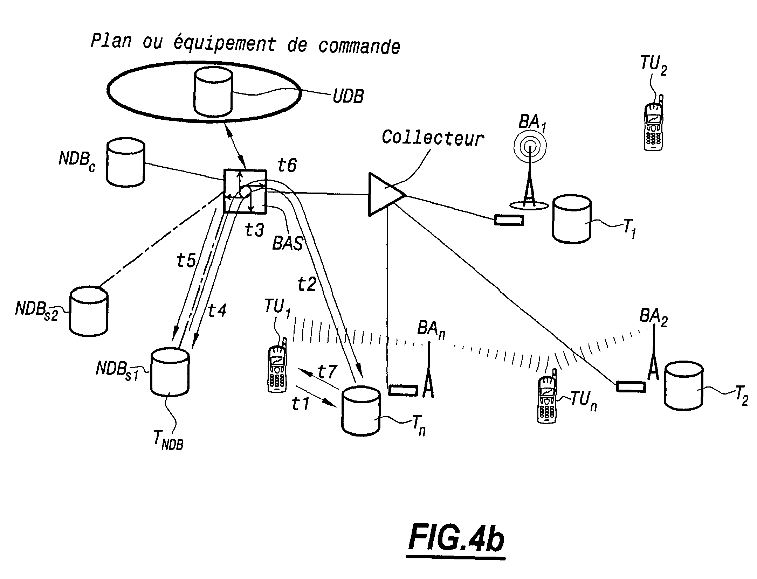

- la figure 4b représente, à titre illustratif, un diagramme spatio-temporel d'un protocole de connexion d'un terminal mobile utilisateur à la borne d'accès radio dans le cas d'une architecture d'un système de gestion des ressources d'un réseau mobile large bande comportant des accès fixes prolongés par des bornes d'accès de réseau local sans fil, dans un mode de mise en oeuvre non limitatif dans lequel la base de données réseau est avantageusement subdivisée en une base de données réseau centrale à laquelle est associée une pluralité de bases de données réseau secondaires assujetties à cette dernière ;

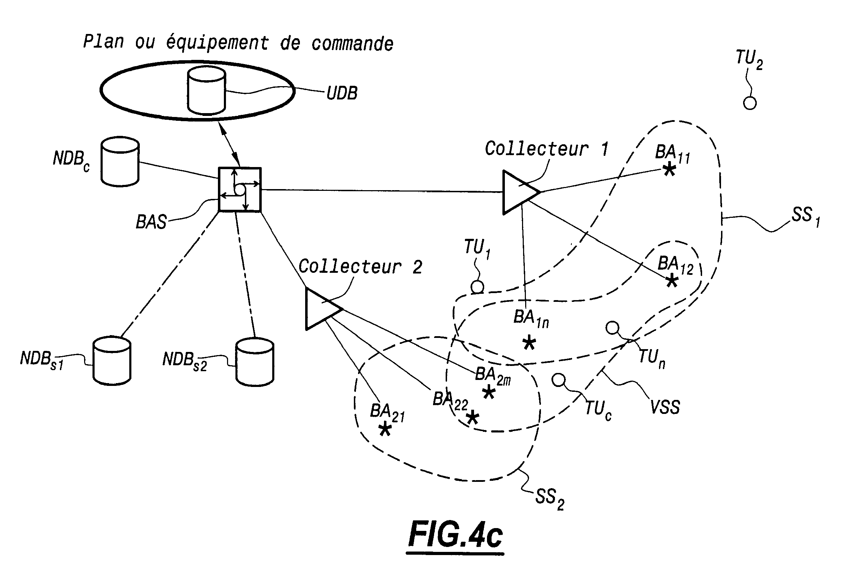

- la figure 4c représente une variante avantageuse de mise en oeuvre du protocole de connexion illustré en figure 4b permettant d'assurer une optimisation de la gestion des ressources réseau lorsque ces dernières, en particulier les bornes d'accès radio, sont subdivisées en sous-ensembles disjoints de bornes d'accès radio, gérés chacun par une base de données réseau secondaire sous l'autorité d'une bas de données réseau centrale ;

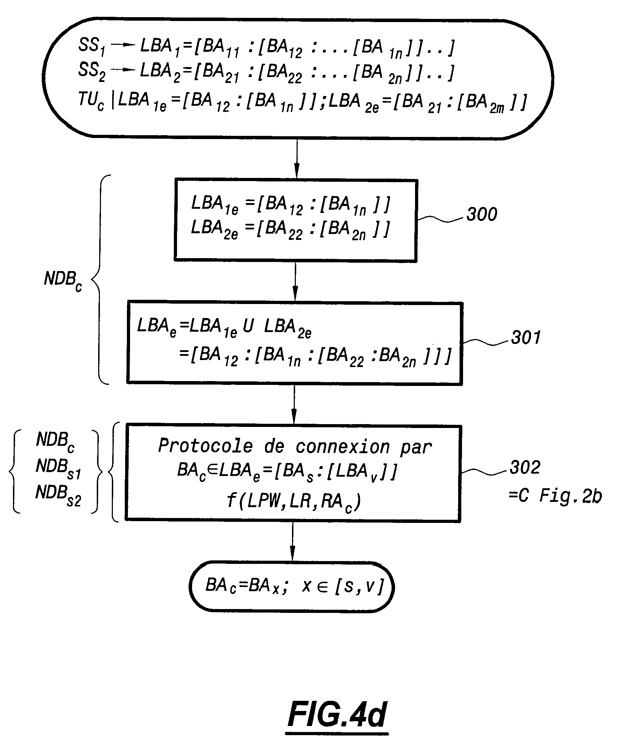

- la figure 4d représente, à titre illustratif, un organigramme de mise en oeuvre du procédé et du protocole de connexion objets de l'invention appliqués à un sous ensemble virtuel de bornes d'accès radio, formé par la base de données réseau centrale, dans le cas de la figure 4c.

Une description plus détaillée du procédé de gestion des ressources d'un réseau mobile large bande conforme à l'objet de la présente invention, ce réseau comportant au moins des accès fixes prolongés par un ensemble de bornes d'accès radio de réseau local sans fil et un serveur d'accès à large bande, sera maintenant donnée en liaison avec les figures 2a, 2b et suivantes.

Le procédé de gestion, objet de la présente invention, peut être mis en oeuvre dans la situation dans laquelle sur transmission d'une requête d'accès à une application transmise par un terminal mobile utilisateur candidat, noté $TU_c$ sur la figure 2a, vers une borne d'accès radio spécifique appartenant au réseau considéré en vue de la connexion du terminal candidat $TU_c$ à cette borne d'accès radio spécifique, $BA_s$, les opérations ci-après sont mises en oeuvre.

En référence à la figure 2a précitée, on considère une pluralité de bornes d'accès radio notées $BA_1$, $BA_2$, $BA_3$ et $BA_4$. Le terminal mobile utilisateur candidat $TU_c$ est réputé recevoir de la part de certaines des bornes d'accès radio précitées, et en particulier de la borne $BA_1$, la borne $BA_2$ et de la borne $BA_4$, un signal radio de niveau suffisant pour permettre la communication avec la borne d'accès radio correspondant.

A titre d'exemple non limitatif, les bornes d'accès radio $BA_1$, $BA_2$ et $BA_4$ sont réputées permettre au terminal mobile utilisateur candidat $TU_c$ un niveau de réception du signal émis par chacune des bornes précitées suffisant pour assurer la transmission de la requête d'accès et l'exécution de l'application demandée avec un niveau de qualité de service QoS suffisant, conformément aux critères de prestations de services d'accès à ces applications.

Par contre, la borne d'accès $BA_3$ est réputée ne pas permettre la réception, par le terminal utilisateur client $TU_c$, d'un signal radio suffisant pour une telle exécution.

En conséquence, on considère a priori que la requête d'accès à une application transmise par le terminal mobile utilisateur candidat $TU_c$ est réalisée vers la borne d'accès spécifique $BA_s$, correspondant par exemple à la borne radio d'accès $BA_1$, la borne d'accès radio spécifique étant définie comme telle par le meilleur niveau de réception du signal radio émis par chacune de bornes $BA_1$, $BA_2$ et $BA_4$ dans l'exemple donné en relation avec la figure 2a par le terminal mobile utilisateur candidat $TU_c$.

Pour la mise en oeuvre du procédé objet de la présente invention, on dispose a priori du niveau de puissance radio électrique du signal reçu par le terminal mobile utilisateur candidat $TU_c$, signal radio électrique émis d'une part par la borne d'accès radio spécifique $BA_s$ et par l'ensemble des bornes d'accès radio voisines $BA_2$ et $BA_4$, lesquelles, par opposition à la borne d'accès radio $BA_3$ non accessible, sont dites en vision directe du terminal utilisateur candidat $TU_c$.

Compte tenu des définitions précédentes, on indique que l'ensemble des bornes d'accès radio éligibles par le terminal utilisateur candidat $TU_c$ est formé par :

- la borne d'accès radio spécifique $BA_s = BA_1$ ;

- le sous-ensemble des bornes d'accès radio voisines en vision directe du terminal utilisateur candidat $TU_c$ représenté par la liste des bornes d'accès radio en vision directe $LBA_v = [BA_2|[BA_4]]$.

L'ensemble des bornes d'accès radio éligibles $LBA_e$ vérifie la relation

$$LBA_e = [BA_s| LBA_v].$$

En ce qui concerne la connaissance et la mise à disposition des niveaux de puissance radioélectrique du signal reçu par le terminal mobile utilisateur candidat $TU_c$, signal radioélectrique émis par chacune des bornes d'accès radio de l'ensemble des bornes d'accès radio éligibles $LBA_e$ précité, on indique que ces données peuvent être obtenues par un processus de scrutation encore désigné "Polling" en anglais à partir d'une unité centrale de gestion, ainsi qu'il sera décrit ultérieurement dans la description.

Le processus de scrutation précité permet également de disposer de l'ensemble des données de débit instantané de chacune des bornes d'accès radio précitées et en particulier :

- le débit instantané de la borne d'accès radio spécifique désigné $R_s = R_1$ ;
- la liste des débits instantanés du sous-ensemble de bornes d'accès voisines représenté par $LR_v = [R_2| [R_4]]$ où $R_2$ et $R_4$ désignent bien entendu le débit instantané des bornes d'accès radio $BA_2$ et $BA_4$ ;
- la liste des débits de l'ensemble des bornes radio éligibles désignées par $LR = [R_s|[LR_v]$.

La notion de débit instantané recouvre celle de débit moyen durant un intervalle de temps déterminé ou celle de débit nécessaire à l'exécution d'une application déterminée.

Enfin, le processus de scrutation précité permet de disposer des données de puissance radioélectrique du signal reçu par le terminal mobile utilisateur candidat $TU_c$ vis-à-vis de l'ensemble des bornes d'accès radio éligibles, et en particulier :

- la puissance radioélectrique reçue par le terminal utilisateur candidat de la part de la borne d'accès spécifique, puissance désignée $PW_{US} = PW_{U1}$ ;
- la liste des puissances radioélectriques reçues par le terminal utilisateur client $TU_c$ de la part des bornes d'accès voisines encore désignées $LPW_{UV} = [PW_{U2}| [PW_{U4}]]$ ;
- la liste de l'ensemble des puissances reçues de la part des bornes d'accès radio éligibles, liste des puissances reçues, notée $LPW = [PWU_s|LPWUV]$.

On considère a priori que l'ensemble des données relatives au débit de chacune des bornes d'accès radio précitées et de puissances radioélectriques reçues par le terminal utilisateur client $TU_c$ de la part des bornes d'accès radio précitées sont disponibles au niveau du centre de gestion précédemment mentionné, ainsi qu'il sera décrit ultérieurement dans la description.

On considère en outre que l'ensemble des données précitées est disponible préalablement à toute transmission d'une requête d'accès à une application transmise par le terminal mobile utilisateur candidat $TU_c$ vers l'une des bornes d'accès radio éligibles précédemment mentionnées.

Le procédé de gestion des ressources d'un réseau mobile à large bande, tel que décrit précédemment en relation avec la figure 2a, sera maintenant décrit en liaison avec la figure 2b.

Le procédé objet de la présente invention est mis en oeuvre sur transmission d'une requête d'accès notée ar_A ($IDTU_c$, $PW_{us}$, $RA_c$).

Dans la requête d'accès précitée,

- $IDTU_c$ désigne un ou des identifiants du terminal utilisateur client $TU_c$ ;
- $PW_U$s désigne la puissance radioélectrique du signal reçu par le terminal mobile utilisateur candidat $TU_c$, ce signal radioélectrique étant émis par la borne d'accès spécifique $BA_s$ et $RA_c$ désigne une référence à l'application dont l'accès est demandé par le terminal utilisateur client $TU_c$.

Enfin, LPW désigne bien entendu, ainsi que mentionné précédemment, la liste de l'ensemble des puissances des signaux radioélectriques émis par les bornes d'accès éligibles précédemment définies.

Sur transmission de la requête d'accès à l'application considérée transmise par le terminal mobile utilisateur candidat $TU_c$, en particulier vers la borne d'accès radio spécifique $BA_s$, le procédé objet de l'invention consiste à discriminer, d'une part, le niveau de puissance radioélectrique du signal émis par la borne d'accès reçu par le terminal mobile utilisateur candidat ainsi que, d'autre part, les identifiants réseau du terminal mobile utilisateur candidat $IDTU_c$ et de l'application demandée $RA_c$ à partir de la requête d'accès transmise ar_A (.). Cette opération est représentée à l'étape A de la figure 2b. Ainsi que mentionné précédemment, la borne d'accès radio spécifique $BA_s$ est, par exemple, celle pour laquelle le terminal utilisateur client $TU_c$ reçoit le niveau de puissance radioélectrique maximum, issu dans l'exemple donné en relation avec la figure 2a de la borne $BA_1$, celle pour laquelle la distance directe entre le terminal utilisateur client $TU_c$ et la borne d'accès radio considérée est minimale ou, à tout le moins, pour laquelle les conditions de transmission radio sont les meilleures et l'atténuation la plus faible.

L'étape A est alors suivie d'une étape B consistant à comparer les identifiants réseau discriminés, c'est-à-dire les identifiants $IDTU_c$, à des identifiants de référence pour assurer un contrôle d'accès mobile au réseau à large bande, ces identifiants de référence étant notés au test B de la figure 2b $IDTU_R$. L'opération de comparaison est symbolisée par la relation

$$IDTU_c \stackrel{\equiv}{} IDTU_r?$$

Sur réponse positive à l'étape de comparaison B, cette dernière est suivie d'une étape C consistant à discriminer, à partir d'une liste de référence comportant la borne d'accès radio spécifique et au moins une borne d'accès radio voisine à cette borne radio spécifique, borne d'accès voisine choisie parmi l'ensemble de bornes d'accès radio, une borne d'accès radio candidate à l'exécution de l'application requise $RA_c$ au bénéfice du terminal mobile utilisateur candidat $TU_c$, par l'intermédiaire du serveur d'accès à large bande équipant le réseau mobile large bande soumis au procédé de gestion des ressources objet de l'invention.

En référence à la figure 2b, on comprend, en particulier, que la liste de référence des bornes d'accès radio est avantageusement constituée par la liste des bornes d'accès radio éligibles $LBA_e$ précédemment désignée dans la description, c'est-à-dire la liste $LBA_e$ = [$BA_s$⫫$LBA_v$].

La discrimination de la borne d'accès radio candidate à la transmission de la requête d'accès et à l'exécution de l'application demandée $RA_c$ est effectuée sur la liste de référence en fonction de la localisation du terminal mobile utilisateur candidat $TU_c$ vis-à-vis de la borne d'accès radio spécifique, de la charge en débit de trafic de chaque borne d'accès radio, de la liste représentant l'ensemble des bornes d'accès radio, c'est-à-dire la liste des bornes d'accès radio éligibles $LBA_e$ et, bien entendu, du type d'application requise $RA_c$.

Une description plus détaillée du processus de discrimination, dans la liste de référence, d'une borne d'accès radio candidate à la transmission de la requête d'accès et à l'exécution de l'application demandée sera maintenant donnée en liaison avec la figure 2c.

Pour la mise en oeuvre de l'étape de discrimination représentée à l'étape C de la figure 2b, on dispose de la liste de référence formée par la liste des bornes d'accès radio éligibles $LBA_e$ = [$BA_s$⫫$LBA_v$] et de la fonction de discrimination fonction de la liste des puissances reçues par le terminal utilisateur candidat TUc de l'ensemble des bornes d'accès radio précitées, de la liste des débits de chacune des bornes d'accès radio considérées précitées, liste des débits notés LR, et de la référence à l'application demandée $RA_c$ par le terminal utilisateur client $TU_c$. Cette fonction est notée f(LPW, LR, $RA_c$).

Conformément à un aspect remarquable du procédé objet de l'invention, pour une borne d'accès radio spécifique non disponible, sur critère de charge de débit de trafic de celle-ci, le procédé précité consiste à choisir comme borne d'accès radio candidate celle pour laquelle la puissance radio du signal reçu par le terminal mobile utilisateur candidat est la plus élevée ou dont la charge en débit est la plus favorable.

Dans ce but, l'étape de départ $C_o$ précédemment décrite et représentée en figure 2c, peut-être suivie avantageusement d'une étape $C_1$ de tests sur la valeur du débit instantané de la borne d'accès radio spécifique, valeur $R_s$, vis-à-vis d'une valeur maximale de débit de la borne d'accès radio spécifique, valeur maximale notée $R_{sMAx}$.

Sur réponse négative au test $C_1$, le débit instantané de la borne d'accès radio spécifique $B_s$ n'étant pas égal et étant inférieur à la valeur maximale du débit de la borne d'accès radio spécifique $R_{sMAx}$, l'étape $C_1$ est suivie d'une étape $C_{16}$ dans laquelle la borne d'accès radio spécifique $BA_s$ est choisie comme borne d'accès radio candidate, ce choix étant symbolisé par la relation $BA_c = BA_s$. Suite à l'étape $C_{16}$ précitée du processus de connexion proprement dit entre le terminal utilisateur candidat TUc et la borne d'accès radio candidate choisie $BA_c = BA_s$ peut alors être mise en oeuvre selon un processus ou protocole de connexion non représenté au dessin et qui sera décrit ultérieurement dans la description.

Au contraire, sur réponse positive au test $C_1$ de la figure 2c, lorsque le débit instantané de la borne d'accès radio spécifique est au plus égal au débit maximum de cette dernière, $R_{sMAX}$, il n'est bien entendu pas possible de retenir comme borne d'accès radio candidate la borne d'accès spécifique. Cette dernière est bien entendu considérée comme non disponible.

Dans ces conditions, le procédé objet de la présente invention consiste à choisir comme borne d'accès radio candidate celle dont la puissance radioélectrique du signal est la plus élevée ou dont la charge en débit est la plus favorable, ainsi que représenté aux étapes $C_2$ et suivantes de la figure 2c.

Dans cette situation, on considère à l'étape $C_2$ une liste de référence formée par une liste des bornes d'accès radio éligibles simplifiée consistant, à titre d'exemple non limitatif, en la liste des bornes d'accès en vision directe $LBA_v$, la borne d'accès radio spécifique $BA_s$ étant considérée comme indisponible. On dispose à cette même étape $C_2$ de la liste des débits des bornes d'accès en vision directe c'est-à-dire de la liste des débits $LR_v = [R_2, R_4]$ dans l'exemple donné en relation avec la figure 2b.

Dans cette situation, une étape de test $C_3$ est appelée, laquelle consiste à vérifier que le débit nécessaire à l'exécution de l'application demandée $RA_c$, débit nécessaire noté $RAR_c$, est inférieur à la différence du débit maximum de chaque borne d'accès radio admissible et du débit instantané de la borne d'accès radio correspondante.

L'opération de tests de l'étape $C_3$ sur la figure 2c est représentée par la relation

$$R_{iMAX} - R_i > RAR_c$$

dans laquelle
$R_{iMAX}$ désigne le débit maximum pour la borne d'accès radio d'index ou adresse i appartenant aux bornes voisines de l'étape $C_2$, c'est-à-dire aux bornes $BA_2$ et $BA_4$, $R_i$ désigne les débits instantanés $R_2$ et $R_4$ des bornes précitées et $RAR_c$ désignant le débit nécessaire à l'exécution de l'application demandée $RA_c$.

Sur réponse positive au test réalisé à l'étape $C_3$, une étape $C_4$ est appelée dans laquelle on dispose de la liste des puissances des signaux reçus par le terminal utilisateur client $TU_c$ de la part des bornes d'accès radio éligibles, c'est-à-dire de la liste des bornes d'accès voisines, la liste des puissances précitées vérifiant la relation

$$LPW_v = [PW_2, [PW_4]].$$

L'étape $C_4$ peut alors être suivie d'une étape $C_5$ consistant à déterminer, parmi la liste des puissances précitées, la puissance maximale parmi les valeurs de puissance contenues dans la liste précédemment mentionnée. Cette opération est représentée à l'étape $C_5$ par la relation

$$PW_{i\,max} = \max (LPW_v).$$

Par l'opération précitée, on détermine quelle est la borne d'accès radio voisine $BA_2$ ou $BA_4$ qui délivre au terminal utilisateur client $TU_c$ la puissance maximale $PW_i$ max.

Sur réponse positive à l'étape $C_6$, une discrimination de la puissance radioélectrique reçue par le terminal utilisateur candidat $TU_c$ ne pouvant être effectuée, un test $C_8$ est appelé, lequel consiste avantageusement à comparer les débits instantanés des bornes d'accès radio constitutives des bornes d'accès radio éligibles. Le test exécuté à l'étape $C_8$ consiste, par exemple, à comparer le débit instantané $R_2$ de la borne d'accès radio $BA_2$ et le débit instantané de la borne d'accès radio $BA_4$, débit instantané désigné $R_4$.

Sur réponse négative au test C8, les débits instantanés des bornes d'accès radio voisines $BA_2$ et $BA_4$ étant sensiblement identiques, on choisit comme borne d'accès radio candidate $BA_c$, soit la borne $BA_2$ soit la borne $BA_4$. Cette opération est réalisée à l'étape $C_{11}$ symbolisée par la relation

$Ba_c = BA_2$ ou $BA_4$.

Au contraire, sur réponse positive au test $C_8$, les bornes d'accès radio voisines $BA_2$ et $BA_4$ ne présentant pas le même débit instantané, une opération de test

$C_9$ est appelée, laquelle consiste à déterminer le débit minimum instantané sur les valeurs de débit contenues dans la liste de débits des bornes voisines. Cette opération réalisée à l'étape $C_9$ est représentée par la relation

$$R_{i\ min} = min\ (LR_v).$$

L'étape $C_9$ précitée permet de discriminer la valeur $_{i\ min}$ pour laquelle le débit de la borne d'accès voisine $BA_2$ ou $BA_4$ est minimum.

L'étape $C_9$ précitée peut alors être suivie d'une étape $C_{10}$ consistant à choisir comme borne d'accès radio candidate $BA_c$ la borne d'accès radio dont l'indice correspond à l'indice imin déterminé à l'étape $C_9$. L'opération de l'étape $C_{10}$ est symbolisée par la relation

$$BA_c = BA_{i\ min}.$$

Sur réponse négative à l'étape $C_3$ de la figure 2c, toutes les bornes d'accès radio éligibles sont maintenant indisponibles.

Dans ces conditions, pour un sous-ensemble de bornes d'accès radio éligibles indisponibles formé par la borne d'accès radio spécifique et par une pluralité de bornes d'accès radio voisines indisponibles, on considère à nouveau la situation où la liste des bornes d'accès radio éligibles $LBA_e$ est formée par l'ensemble des bornes radio $LBA_e = [BA_s \vert LBA_v]$ et où l'on dispose bien entendu de la liste des débits $LR = [R_s \vert LR_v]$.

Dans ces conditions, une pluralité de terminaux mobiles utilisateurs est alors connectée à chacune des bornes d'accès radio constituant le sous-ensemble de bornes d'accès radio indisponibles. On comprend, en particulier, que le débit instantané $R_i$ de chacune des bornes d'accès radio constitutives du sous-ensemble des bornes d'accès radio éligibles est alors suffisamment proche de la valeur du débit maximum $R_iMax$, $i \in [s,v]$, pour empêcher toute exécution de l'application demandée $RA_c$, laquelle demande un débit nécessaire RARc supérieur au débit résiduel admissible pour chaque borne d'accès radio considérée.

Dans cette situation, le procédé objet de l'invention consiste alors à recalculer les débits de trafic alloués à chaque terminal mobile utilisateur connecté pour au moins l'une des bornes d'accès radio du sous-ensemble de bornes d'accès indisponibles, en fonction des conditions d'accès et de l'application exécutée par chaque terminal mobile utilisateur connecté, de façon à définir un débit de trafic pondéré susceptible d'être alloué à chaque terminal mobile utilisateur connecté. Cette opération de recalcul est alors suivie d'une étape consistant à allouer, à chaque terminal utilisateur connecté, le débit de trafic pondéré de façon à dégager, pour la borne d'accès radio du sous-ensemble de bornes d'accès radio indisponibles, des ressources de transmission en termes de débit de trafic autorisant la transmission de la requête d'accès et l'exécution de l'application demandée RAc au bénéfice du terminal mobile utilisateur candidat $TU_c$.

Les opérations de recalcul et d'allocation peuvent alors être mises en oeuvre de manière avantageuse non limitative, par les étapes $C_{12}$, $C_{13}$ et $C_{14}$ représentées à la figure 2c.

A l'étape $C_{12}$, on dispose de la liste des débits de chaque borne d'accès radio éligibles de la forme LR $= [R_s \vert LR_v]$.

Pour i indice ou adresse de chaque borne d'accès radio appartenant à [s,v] de l'ensemble des bornes d'accès radio éligibles, on calcule l'écart de débit de chacune des bornes d'accès radio considérée éligible, écart de débit instantané vis-à-vis du débit maximum autorisé pour la borne d'accès radio correspondante, et l'on détermine la valeur maximale de cet écart.

Cette opération est représentée symboliquement par la relation

$$|R_{iMAX} - R_i| = MAX.$$

La valeur maximale obtenue pour une borne d'accès radio d'indice ou d'adresse i est celle pour laquelle l'opération de pondération et de recalcul des débits de trafic alloués à chaque terminal mobile utilisateur connecté sera exécutée, ceci afin de perturber le moins possible les débits alloués à chacun des terminaux utilisateurs connectés. On comprend, en particulier, que lorsque l'écart de débit précité est maximum, la perturbation apportée à chacun des terminaux mobiles utilisateur connectés qui se voient ainsi réallouer un débit autorisé plus faible est bien entendu minimale.

L'opération réalisée à l'étape $C_{12}$ permet de discriminer un indice $_{ip}$ sur lequel l'opération de recalcul des débits et d'allocation d'un débit de trafic pondéré à chacun des terminaux utilisateurs connectés est réalisée. Cette opération est symbolisée à l'étape $C_{12}$ par la relation

ip → $BA_{ip}$, borne d'accès radio sur laquelle l'opération de recalcul et d'allocation du débit de trafic pondéré est alors exécutée. Bien entendu, l'indice ip appartient lui-même à l'ensemble [s, v]. L'étape $C_{12}$ est alors suivie d'une étape $C_{13}$ dans laquelle on dispose de l'ensemble des terminaux utilisateurs connectés à la borne d'accès radio d'adresse ip sur laquelle l'opération de recalcul des débits pondérés va être effectuée. L'ensemble des terminaux utilisateurs connectés à la borne d'accès adresse ip est noté pour cette raison $[TU_{ipj}]^J$, J désignant le nombre de terminaux utilisateurs connectés à la borne d'accès radio d'indice ou adresse ip précitée. Bien entendu, on dispose aussi du terminal utilisateur client $TU_c$.

L'étape $C_{13}$ est alors suivie d'une étape $C_{14}$ consistant à calculer le trafic pondéré alloué à chacun des terminaux utilisateurs connectés, l'ensemble des débits pondérés étant doté pour cette raison [WR$_{ipj}$] $^J$ pour chacun des terminaux connectés.

A chaque débit pondéré alloué WR$_{ipj}$ correspond un taux d'occupation, noté $\tau_{ipj}$ de la borne d'accès radio BA$_{ip}$ pour chacun des terminaux TU$_j$ connectés à cette dernière, pour laquelle le calcul des débits pondérés a été effectué. L'ensemble des taux d'occupation est noté [$\tau_{ipj}$]. Le taux d'occupation de chacun des terminaux utilisateurs connecté à la borne d'accès radio pour laquelle les débits pondérés ont été calculés et réalloués peut être déterminé en taux d'occupation de bande passante par exemple.

L'étape C$_{14}$ peut alors être suivie d'une étape C$_{15}$ dans laquelle, d'une part, la borne d'accès radio candidate choisie est celle qui correspond à la borne d'accès radio dont l'adresse ou indice correspond à l'indice ip et où, d'autre part, les débits alloués à chaque terminal utilisateur connecté ont été modifiés par l'allocation des débits pondérés précédemment calculés.

Cette opération est symbolisée par la relation BA$_c$ = BA$_{ip}$ et [WR$_{ipj}$] $^J$ indiquant l'affectation à chacun des terminaux connectés d'une valeur pondérée du débit alloué correspondante.

Une variante de mise en oeuvre préférentielle du procédé, objet de la présente invention, sera maintenant décrite en liaison avec la figure 2d. La variante de mise en oeuvre précitée correspond à une situation dans laquelle pour un sous-ensemble de bornes d'accès radio indisponibles mais éligibles formé par la borne d'accès radio spécifique et par une pluralité de bornes d'accès radio voisines et indisponibles, une pluralité de terminaux mobiles utilisateurs est également connectée à chacune des bornes d'accès radio du sous-ensemble considéré. Cette situation peut correspondre, par exemple, à une réponse négative au test C$_3$ de la figure 2c. Dans cette situation, on dispose de la liste des bornes d'accès radio éligibles LBA$_e$ =[BA$_s$!LB$_v$], du terminal utilisateur candidat TU$_c$ et, bien entendu, de la fonction discrimination f (LW, LR, RA$_c$).

Dans cette situation, un test C$_{17}$ peut être effectué, préalablement à l'étape C$_{12}$ de la figure 2c, pour détecter l'un des terminaux mobiles utilisateurs spécifiques, noté TU$_s$, connecté à l'une des bornes d'accès radio du sous-ensemble de bornes d'accès radio, c'est-à-dire représenté par la liste de bornes d'accès radio éligibles LBA$_e$, mais en vision directe d'au moins une borne d'accès radio adjacente distincte du sous-ensemble de bornes d'accès radio défini par la liste de référence LBA$_e$ précitée.

A l'étape C$_{17}$ de test de la figure 2d, la détection du terminal mobile utilisateur spécifique TU$_s$ est notée par la relation symbolique

$\exists$TU$_s$ $\leftrightarrow$ BA$_k$|LBA$_v$.?. Dans la relation symbolique précitée, la correspondance en double flèche du terminal utilisateur spécifique TU$_s$ et de la borne d'accès radio BA$_k$ indique la connexion du terminal utilisateur spécifique précité à la borne d'accès radio BA$_k$, $k \in$ [$s$, $v$] de la liste de bornes d'accès radio éligibles LBA$_e$ et

| LBA$_{v'}$ indique la position du terminal mobile utilisateur spécifique TU$_s$ en vis-à-vis d'au moins une borne d'accès radio adjacente distincte du sous-ensemble de bornes d'accès radio LBA$_e$ éligibles. On comprend ici que v' n'appartient pas à [s, v].

La situation précitée se produit lorsque des bornes d'accès radio, bien que spatialement à proximité l'une de l'autre, sont gérées par des systèmes de gestion de réseaux distincts, en particulier par des base de données distinctes, ainsi qu'il sera décrit ultérieurement dans la description.

On considère maintenant l'étape C$_{18}$ selon laquelle l'interrupteur logique C$_{18}$ est fermé, l'étape C$_{22}$ étant pour l'instant court-circuité et non exécutée. L'étape C$_{17}$ est alors suivie dans ces conditions d'une étape C$_{19}$ consistant à déconnecter le terminal mobile utilisateur spécifique TU$_s$ de la borne d'accès radio du sous-ensemble d'accès radio à laquelle ce terminal mobile utilisateur spécifique est connecté, soit à déconnecter TU$_s$ de BA$_k$, afin de délester et rendre disponible la borne d'accès radio BA$_k$ précitée.

L'étape C$_{19}$ peut alors être suivie d'une étape C$_{20}$ consistant à connecter le terminal utilisateur candidat TU$_c$ sur la borne d'accès radio délestée et rendue ainsi disponible, c'est-à-dire la borne BA$_k$ précédemment citée.

L'étape C$_{20}$ peut alors être suivie d'une étape C$_{21}$ consistant à reconnecter le terminal utilisateur spécifique TU$_s$ sur l'une des bornes d'accès radio adjacentes distincte du sous-ensemble de bornes d'accès radio, c'est-à-dire sur une borne BAx, x appartenant cette fois aux bornes d'accès radio constitutives de la liste des bornes d'accès radio en vis-à-vis du terminal TU$_s$. Cette opération est notée à l'étape C$_{21}$ par la relation symbolique

$$TU_s \leftrightarrow BA_{x,} \; x \in LBA_{v'}.$$

Ainsi qu'on l'a représenté en figure 2d par l'existence de l'interrupteur logique C$_{18}$, et ce, conformément à une caractéristique particulièrement avantageuse du procédé objet de la présente invention, l'opération consistant à déconnecter le terminal mobile utilisateur spécifique TU$_s$ peut avantageusement être rendue conditionnelle à l'exécution d'une application non temps réel par le terminal utilisateur spécifique TU$_s$ précité, lorsque ce dernier est connecté, et en outre à la requête d'accès ou à l'exécution par le terminal utilisateur candidat TU$_c$ d'une application RA$_c$ constituée par une application temps réel. Ceci permet de prioriser l'exécution des applications temps réel vis-à-vis de l'exécution des applications non temps réel, lesquelles ne nécessitent pas des qualités de service ou en tout cas des caractéristiques de continuité de services aussi importantes que les applications temps réel. Dans ces conditions, ainsi que représenté en figure 2d, il est prévu un test C$_{22}$ consistant à déterminer la nature de l'application exécutée par le

terminal utilisateur spécifique $TU_s$ ainsi que la nature de l'application demandée et qui sera exécutée par le terminal utilisateur candidat $TU_c$. La discrimination de la nature de ces applications s'entend de la nature non temps réel respectivement temps réel de ces dernières.

Ainsi, l'opération de test réalisée à l'étape $C_{22}$ peut être mise en oeuvre par l'ouverture de l'interrupteur logique $C_{18}$, le test $C_{22}$ étant ainsi exécuté. Il consiste, ainsi que représenté à l'étape $C_{22}$ de la figure 2d, à vérifier l'appartenance de l'application $RA_s$ exécutée par le terminal $TU_s$ au domaine des applications non temps réel et de l'appartenance de l'application exécutée par le terminal utilisateur candidat $TU_c$, application $RA_c$, au domaine des applications temps réel.

L'opération de test réalisée à l'étape $C_{22}$ est représentée par la relation symbolique

$$RA_s \in \overline{RTA} \ ET \ RA_c \in RTA$$

$\overline{RTA}$ désignant une liste d'applications non temps réel et RTA désignant une liste d'applications temps réel.

Enfin, une description plus détaillée de l'étape $C_{14}$ de la figure 2c consistant à recalculer les débits de trafic alloués à chaque terminal utilisateur connecté $TU_j$ et consommant un débit $R_{ij}(RA_j, a_j)$ en liaison avec une borne d'accès radio $BA_i$ donnée sera maintenant donnée en liaison avec la figure 2e. Le débit consommé $R_{ij}(RA_j, a_j)$ est fonction de l'application $RA_j$ exécutée et des conditions d'accès au réseau $a_j$.

En référence à la figure précitée, on considère la situation de départ de chacun des terminaux $TU_j$ connecté à la borne d'accès $BA_i$ et consommant le débit $R_{ij}$ $(RA_j, aj)$. L'opération consistant à recalculer les débits de trafic peut comporter, ainsi que représenté sur la figure 2e, une étape $C_{141}$ d'attribution à chaque terminal mobile utilisateur connecté $TU_j$ d'un coefficient de priorité de transmission en fonction des conditions d'accès et de l'application exécutée, les conditions d'accès étant notées $a_j$ et correspondant bien entendu aux conditions d'abonnement ou, plus particulièrement d'accès réseau en termes de bande passante et de capacité réseau allouées au terminal $TU_j$ considéré. L'application exécutée $RA_j$ détermine bien entendu le débit instantané consommé par le terminal $TU_j$ connecté à la borne d'accès radio $BA_i$ correspondante. Le coefficient de priorité de transmission est un coefficient dit de pondération, lequel est noté $w_j(RA_j, a_j)$. L'étape $C_{141}$ peut alors être suivie d'une étape $C_{142}$ consistant à effectuer la pondération du débit du trafic alloué et consommé par chaque terminal mobile connecté en fonction du coefficient de priorité de transmission alloué selon la relation donnée à l'étape $C_{142}$ de la figure 2e

$$WR_{ij} = R_{ij} \times w_j (RA_j, a_j).$$

Dans la relation précédente on rappelle que $R_{ij}$ désigne le débit instantané consommé par le terminal utilisateur $TU_j$ connecté à la borne d'accès radio $BA_i$ et $w_j$ désigne le coefficient de priorité, compris entre 0 et 1 par exemple, affecté au terminal $TU_j$ à l'étape $C_{141}$ précédemment décrite.

Une description plus détaillée d'un système de gestion des ressources d'un réseau mobile large bande, ce réseau comportant au moins des accès fixes prolongés par un ensemble de bornes d'accès radio de réseau local sans fil et un serveur d'accès à large bande, conforme à l'objet de la présente invention, sera maintenant décrit en liaison avec la figure 3a et les figures suivantes.

D'une manière générale, on rappelle que le système de gestion des ressources d'un réseau mobile large bande objet de l'invention est intégré à un réseau mobile large bande tel que représenté en figure 1 et en comporte bien entendu tous les éléments fonctionnels et/ou matériels.

Le système objet de l'invention est remarquable en ce qu'il comporte en outre, interconnecté au serveur d'accès à large bande BAS, un module CM de commande de connexion, de transmission conditionnelle de la requête d'accès ar_A (.) et d'exécution de l'application au bénéfice d'un terminal mobile utilisateur candidat $Tu_c$.

Le module de commande CM comporte au moins, de manière classique, une unité centrale de calcul CPU, une mémoire de travail RAM, interconnectés au serveur d'accès à large bande BAS.

Ces éléments de type classique ne seront pas décrits en détail. Le module de commande CM est implanté en réseau et interconnecté au serveur d'accès à large bande BAS, le lieu d'implantation pouvant être quelconque vis-à-vis de ce dernier, mais de préférence au voisinage du serveur d'accès à large bande par exemple.

Ainsi que représenté en figure 3a, le module de commande CM comporte en outre un module $M_1$ de discrimination, à partir de la requête d'accès ar_A (.), des identifiants réseau du terminal mobile utilisateur candidat et de l'application $RA_c$ demandée par ce dernier ainsi que de la valeur numérique représentative de la puissance radioélectrique du signal reçu par le terminal mobile utilisateur candidat précité, émis en particulier par la borne d'accès radio spécifique $BA_s$, ainsi que décrit précédemment dans la description.

Le module de commande CM comporte en outre, ainsi que représenté sur la figure 3a, un module décisionnel exécutable DM comportant au moins un module $M_2$ de comparaison des identifiants réseau discriminés à des identifiants de référence pour assurer un contrôle d'accès au réseau mobile large bande. Il comporte également un module $M_3$ exécutable de discrimination, lequel peut être appelé sur réponse positive du module de comparaison $M_2$ précédemment cité.

Le module exécutable de discrimination $M_3$ permet à partir d'une liste de référence formée de la borne d'accès radio spécifique $BA_s$ et d'au moins une borne d'accès radio voisine, c'est-à-dire en vision directe du terminal utilisateur candidat $TU_c$, en fonction de la localisation du terminal mobile utilisateur candidat vis-à-vis de la borne d'accès radio spécifique, de la charge de débit de trafic de chaque borne d'accès radio de l'ensemble de bornes d'accès radio voisines et du type d'applications requis, la discrimination d'une des bornes d'accès radio, de cet ensemble de bornes d'accès radio, candidate à la transmission de la requête d'accès et à l'exécution de l'application demandée au bénéfice du terminal mobile utilisateur candidat par l'intermédiaire du serveur d'accès à large bande.

On comprend, en particulier, que les modules de discrimination, modules décisionnels exécutables DM et les modules de comparaison $M_2$ et de discrimination $M_3$ sont alors hiérarchisés et représentés par des modules logiciels directement exécutables directement appelés par l'unité centrale CPU pour exécution en mémoire de travail RAM, conformément au procédé objet de la présente invention décrit précédemment.

Ainsi qu'on l'a représenté en outre en figure 3a, on indique que le module $M_1$ de discrimination des identifiants réseau du terminal mobile utilisateur candidat, c'est-à-dire des identifiants $IDTU_c$ comporte avantageusement au moins une base de données utilisateur UDB comportant les identifiants réseau de référence $IDTU_R$ et les conditions d'accès de chaque terminal mobile utilisateur candidat, c'est-à-dire des conditions d'accès fournies en termes de capacité réseau de bande passante et de débit de transmission par tout abonnement $a_j$ souscrit par l'utilisateur de tout terminal utilisateur $TU_j$.

Bien entendu, la base de données utilisateur UDB doit être comprise comme associée au module de discrimination $M_1$ des identifiants réseau. On comprend, en particulier, que la base de données utilisateur UDB est directement interconnectée au serveur large bande BAS et n'est pas nécessairement localisée au niveau du module de commande CM. Le module $M_1$ de discrimination et la base de données utilisateur UDB sont ainsi associés fonctionnellement.

De la même manière, ainsi que représenté de manière illustrative sur la figure 3a, le module exécutable de discrimination $M_3$ comporte au moins une base de données réseau notée NDB comportant au moins les caractéristiques de chacune des bornes d'accès radio $BA_i$ en termes de charge de débit de transmission $R_i$ et de nombre de terminaux mobiles utilisateurs connectés par exemple. En outre, au module exécutable de discrimination $M_3$ est directement associé un module $M_4$ de calcul de discrimination d'une borne d'accès radio candidate à la transmission de la requête d'accès et à l'exécution de l'application au bénéfice du terminal mobile utilisateur candidat.

On comprend, en particulier, que le module de calcul de discrimination $M_4$ correspond avantageusement à un module logiciel mettant en oeuvre les étapes des organigrammes représentés aux figures 2c, 2d et 2e précédemment décrites dans la description.

Enfin, chaque borne d'accès radio désignée $BA_i$ de manière générique comporte une table de données $T_i$ comportant au moins :

- une liste $LTU_{co}$ des identifiants réseau de chaque terminal mobile utilisateur connecté à la borne d'accès radio $BA_i$ considérée ;
- une liste des terminaux utilisateurs représentés par leurs identifiants réseau, liste $LTU_{VD}$, en vision directe de la borne d'accès radio $Ba_i$ considérée et de la puissance radioélectrique reçue par chacun des terminaux en vision directe de la borne d'accès radio $BA_i$ considérée. Cette liste de puissances radioélectriques étant désignée $LPW_j$ ;
- une liste des terminaux utilisateurs connectés à la borne d'accès radio, des conditions d'accès allouées à chacun d'eux et de la puissance radioélectrique reçue par chaque terminal utilisateur de la borne d'accès radio à laquelle chacun de ces terminaux utilisateurs est connecté, liste désignée $LTU_{co}$ ;
- un paramètre de taux d'occupation en termes de charge de débit de la borne d'accès radio $BA_i$ considérée, ce paramètre étant noté $\tau_i$ et correspondant, par exemple, à la somme des taux d'occupation de chacun des terminaux connectés à la borne d'accès radio considérée, exprimé en termes de débit consommé par chacun d'eux vis-à-vis de la borne d'accès radio précitée.

En outre, ainsi que représenté en figure 3a, la base de données réseau NDB comporte avantageusement une table de données notée $T_{NDB}$ comportant au moins

- une liste des caractéristiques radioélectriques des différentes bornes d'accès radio en termes de caractéristiques radioélectriques et de charge ou de débit maximum admissible et de débit instantané de ces dernières ;
- une liste du taux d'occupation $\tau_i$ de chaque borne d'accès radio ;
- une liste du nombre de terminaux utilisateurs connectés sur chaque borne d'accès radio $BA_i$;
- une liste des terminaux utilisateurs en vision directe de chaque borne d'accès radio, liste $LTU_{VD}$;
- une liste des terminaux utilisateurs disposant de connexions d'accès c'est-à-dire d'un abonnement d'accès mais non détectée par l'une quelconque des bornes d'accès radio et donc hors réseau, cette liste étant notée $LTU_{oc}$.

On comprend que les listes précitées peuvent être obtenues par concaténation des listes correspondantes disponibles sur chacune des tables de données contenue au niveau de chacune des bornes d'accès radio $BA_i$ considérée.

La présente invention concerne également un programme informatique, enregistré sur un support de mémorisation, pour la mise en oeuvre du procédé objet de l'invention, par exécution par un ordinateur, procédé tel que décrit en liaison avec les figures 2b, 2c, 2d et 2e. L'exécution par un ordinateur s'entend de l'exécution des étapes consistant au moins à discriminer, d'une part, le niveau de puissance radioélectrique du signal émis par la borne d'accès reçu par le terminal mobile utilisateur candidat, et, d'autre part, les identifiants réseau du terminal mobile utilisateur candidat et de l'application demandée, à partir de la requête d'accès, comparer les identifiants réseau discriminés à des identifiants de référence pour assurer un contrôle d'accès à ce réseau mobile large bande, puis sur réponse positive à l'opération de comparaison, discriminer à partir d'une liste de référence comportant la borne d'accès radio spécifique et au moins une borne d'accès radio voisine à cette borne d'accès radio spécifique, choisies parmi cet ensemble de bornes d'accès radio, en fonction de la localisation du terminal mobile utilisateur candidat, vis-à-vis de la borne d'accès radio spécifique, de la charge en débit de trafic de chaque borne d'accès radio de cet ensemble de bornes d'accès radio et du type d'application requise, une borne d'accès radio candidate à l'exécution de cette application au bénéfice du terminal mobile utilisateur candidat, par l'intermédiaire du serveur d'accès à large bande.

Une description plus détaillée d'un protocole d'échange de messages pour la transmission bidirectionnelle de messages d'information entre la base de données réseau NDB et l'une des bornes d'accès radio $BA_i$, transmission vers un terminal utilisateur, sera maintenant donnée en référence à la figure 3b.

Pour la mise en oeuvre du protocole précité représenté en figure 3b, on considère la situation de départ dans laquelle on dispose de la liste des terminaux utilisateurs connectés $LTU_{co}$ à la borne d'accès radio considérée, de la liste des terminaux utilisateurs en vision directe de la borne d'accès radio considérée, liste $LTU_{VD}$ et de la liste des terminaux utilisateurs disposant de conditions d'accès mais non détectés par l'une quelconque des bornes d'accès radio et donc hors réseau, liste $LTU_{oc}$. Le message d'information à transmettre de la base de données réseau NDB vers la borne d'accès radio considérée $BA_i$ et finalement vers un terminal utilisateur donné est désigné $IM_j$, où j désigne l'adresse effective du terminal mobile utilisateur considéré.

Le protocole de transmission de messages consiste, ainsi que représenté en figure 3b, dans le sens descendant, de la base de données réseau NDB vers la borne d'accès radio $BA_i$, à répertorier et discriminer le terminal mobile utilisateur $TU_j$ dans la liste des utilisateurs connectés $LTU_{co}$ à l'étape 100 de test représentée sur la figure 3b. L'étape de tests est représentée par la relation

$$TU_j \in [LTU_{co}] \ ?.$$

Sur réponse positive à la discrimination de connexion du terminal utilisateur $TU_j$, réponse positive au test 100 de la figure 3b, le protocole de transmission consiste alors en une étape 101 à transmettre directement le message d'information $IM_j$ vers le terminal utilisateur $TU_j$ via la borne d'accès radio à laquelle le terminal utilisateur discriminé $TU_j$ est connecté.

Sinon, sur réponse négative au test 100 de la figure 3b, le terminal mobile utilisateur $TU_j$ n'étant pas en mode connecté, le protocole consiste alors en une étape 102 de test à discriminer le terminal utilisateur $TU_j$ dans la liste des terminaux utilisateurs non connectés, mais en vision directe d'au moins une borne d'accès radio voisine.

Le test de l'étape 102 est représenté par la relation symbolique

$$TU_j \in [LTU_{VD}].$$

Sur réponse positive au test 102, test de discrimination de connexion potentielle du terminal utilisateur candidat à au moins l'une des bornes d'accès voisines, l'on dispose à l'étape 103 de la liste des borne d'accès voisines $LBA_v$ et l'on transmet à l'étape 104, de la base de données réseau NDB vers au moins l'une des bornes d'accès radio voisines, le message d'information $IM_j$.

L'opération de transmission précitée est représentée par la relation symbolique

$$IM_j \rightarrow BA_x \in [LBA_v].$$

L'étape 104 est alors suivie d'une étape 105 consistant à transmettre de l'une des bornes d'accès radio voisine disposant du message d'information, c'est-à-dire la borne $BA_x$ déterminée à l'étape 104, un message de notification de connexion, noté M_NOT, vers le terminal utilisateur discriminé $TU_j$.

Le terminal utilisateur discriminé $TU_j$ est alors en mesure de procéder au passage en mode connecté vis-à-vis de la borne d'accès radio voisine $BA_x$ déterminée à l'étape 104 sur instruction correspondante de l'utilisateur de ce dernier.

Au contraire, sur réponse négative au test 102 de la figure 3b, le terminal utilisateur est répertorié hors réseau.

Dans cette situation, le protocole objet de l'invention représenté en figure 3b consiste à mémoriser en une étape 106 le message d'information $IM_j$ dans la base

de données réseau NDB en attente du passage du terminal utilisateur discriminé $TU_j$ en mode connecté ou en mode non connecté mais en vision directe d'au moins une borne d'accès radio voisine.

La procédure de transmission est alors relancée par retour au test de l'étape 100 pour détecter le passage du terminal utilisateur discriminé $TU_j$ précité en mode connecté ou en mode non connecté mais en vision directe d'au moins une borne d'accès radio voisine. L'opération de relance de la procédure est symbolisée sur la figure 3b par le retour de l'étape 106 au test de l'étape 100.

Pour la transmission de messages d'une borne d'accès radio $BA_i$ quelconque vers la base de données réseau NDB, une procédure avantageuse peut consister à transmettre périodiquement des messages d'information contenant les informations contenues dans la table de données $T_i$ de la borne d'accès radio $BA_i$ considérée. La période de transmission de ces messages peut être déterminée en fonction de l'importance du trafic, de la charge de la borne d'accès radio considérée en termes de débit ou en fonction d'autres paramètres.

Un protocole de transmission de messages d'information entre une borne d'accès radio $BA_i$ et le terminal utilisateur $TU_j$ sera maintenant décrit en liaison avec les figures 3c et 3d.

En référence à la figure 3c précitée, on considère la situation de départ dans laquelle une borne d'accès radio $BA_i$ doit entrer en communication dans le sens descendant avec un terminal utilisateur $TU_j$.

La borne d'accès radio $BA_i$ doit entrer en communication avec tout terminal $TU_j$ dans différentes situations, en particulier dans le sens descendant borne d'accès radio / terminal utilisateur représenté en figure 3c.

En référence à la figure précitée, la transmission de messages peut consister alors à transmettre en une étape 201 des messages de collecte d'informations relatives aux terminaux utilisateurs $TU_j$ situés en vision directe de la borne d'accès radio $BA_i$.

Ces messages de collecte comprennent la requête de transmission par chaque terminal utilisateur des informations d'identifiants de terminal utilisateur, de conditions d'accès au réseau et de puissance radioélectrique de réception. Cette opération consiste en une transmission périodique de type "Polling" ou "Scrutation", les messages de collecte d'informations étant notés IGM ($IDTU_j$, $a_j$, $PWU_j$).

On rappelle que

- $IDTU_j$ désigne les identifiants du terminal utilisateur $TU_j$,
- $a_j$ désigne les conditions d'accès en termes de capacité réseau allouées au terminal $TU_j$ en fonction de l'abonnement de ce dernier ;
- $PWU_j$ désigne la puissance du signal radioélectrique reçu par le terminal $TU_j$ en provenance de la borne d'accès $BA_i$. Les paramètres précités sont transmis par un message de réponse aux messages de collecte d'information précités comprenant les champs $IDTU_j$, $a_j$ et $PWU_j$ précités.

Sur réponse positive au test 202 indiquant l'existence au niveau de la borne d'accès radio $BA_i$ de messages pertinents VM, SMS, CM vis-à-vis du terminal utilisateur $TU_j$, ces messages pertinents étant mémorisé au niveau de la borne d'accès radio $BA_i$, une étape 204 est appelée pour exécuter dans le sens descendant, de la borne d'accès radio $BA_i$ vers le terminal utilisateur $TU_j$, la transmission d'un message de notification de connexion afin que le terminal utilisateur $TU_j$ précité soit en mesure de répondre à un appel entrant soit de récupérer l'information pertinente le concernant. A l'étape 204 de la figure 3c, l'opération de transmission du message de notification de connexion est notée

$BA_i \rightarrow TU_j$

Transmission $m\_NOT_j$

où $m\_NOT_j$ désigne le message de notification de connexion adressé au terminal utilisateur $TU_j$.

Bien entendu, sur réponse négative au test 202 noté "3 i (VM, SMS, CM)$_j$", un retour 203 permet de se ramener à l'étape 201 afin de poursuivre le processus de transmission de messages tel que décrit et assurer ainsi la surveillance de l'occurrence d'un message d'informations pertinentes vis-à-vis du terminal $TU_j$ considéré.

En outre, ainsi que représenté en figure 3d, la transmission de messages dans le sens montant, de chaque terminal mobile utilisateur vers toute borne d'accès radio $BA_i$ en vision directe mais en l'absence de connexion de ce terminal utilisateur vis-à-vis de cette borne d'accès radio, consiste à transmettre en une étape 205 des messages de requête périodiques auprès de toute borne d'accès radio en vision directe pour déterminer l'existence de messages d'information pertinents vis-à-vis du terminal utilisateur $TU_j$ considéré et mémorisé au niveau de la borne d'accès radio $BA_i$ précitée. Les terminaux utilisateurs $TU_j$ sont les terminaux utilisateurs non connectés mais en vision directe de la borne $BA_i$. D'une manière générale, on rappelle que les messages d'information pertinents vis-à-vis du terminal utilisateur $TU_j$ concernent tout message tel que message vocal VM, message texte court, désigné SMS, et message de courrier électronique ou encore message d'appel en absence dans le cas où le terminal $TU_j$ est un terminal de téléphonie mobile par exemple. Ce type de message est désigné CM.

L'opération de transmission représentée à l'étape 205 de la figure 3d est représentée par la représentation symbolique

$TU_j \rightarrow BA_i$

$rm\_m_{ij}$ ? (VM, SMS, CM).

Dans la notation précédente, $rm\_m_{ij}$ désigne le message de requête périodique lancé pour déterminer l'existence de messages d'information pertinents VM, SMS ou CM précédemment mentionnés.

Enfin, on indique que l'étape 201 peut être supprimée. Dans cette situation, la transmission de messages comprenant les champs $IDTU_j$, $a_j$ et $PWU_j$ dans le sens montant peut être exécutée périodiquement, chaque terminal transmettant ce type de message de manière autonome.

Une description plus détaillée d'un protocole de connexion proprement dite d'un terminal utilisateur à un réseau mobile à large bande comportant au moins des accès fixes prolongés par un ensemble de bornes d'accès radio de réseau local sans fil et un serveur d'accès à large bande, l'ensemble étant équipé d'un système de gestion des ressources de ce réseau, ainsi que décrit précédemment en liaison avec les figures 3a à 3c, sera maintenant décrit en liaison avec la figure 4a et les figures suivantes.

Dans cette situation, on considère un terminal utilisateur, le terminal utilisateur $TU_1$, constituant le terminal utilisateur candidat $TU_c$ tel que décrit précédemment dans la description et ayant satisfait à l'un des critères de choix de la borne d'accès radio $BA_n$, laquelle constitue la borne d'accès radio candidate pour le terminal utilisateur candidat $TU_j$ précité.

On comprend en particulier que le procédé objet de la présente invention ayant été mise en oeuvre, l'étape consistant à discriminer une des bornes d'accès radio comme borne d'accès radio candidate à la transmission de la requête d'accès et à l'exécution de l'application au bénéfice du terminal mobile utilisateur candidat $TU_j$ est alors suivi d'une étape de redirection de flux à destination du terminal mobile utilisateur candidat exécuté par le serveur d'accès à large bande BAS, afin de permettre la connexion de ce terminal mobile utilisateur candidat au réseau mobile large bande par l'intermédiaire de la borne d'accès radio candidate retenue, c'est-à-dire, dans le cas de la figure 4a, la borne $BA_c = BA_n$ pour l'accès à l'application demandée et l'exécution de cette dernière.

On considère en conséquence que le terminal utilisateur $TU_1$ de la figure 4a constituant le terminal utilisateur candidat $TU_c$ ainsi que mentionné précédemment est donc en mode connecté vis-à-vis de la borne d'accès radio $BA_n$ constituant la borne d'accès radio candidate.

En référence à la figure 4a, on indique que le protocole de connexion proprement dit peut consister avantageusement au niveau de la borne d'accès radio candidate $BA_n$ à actualiser, dans la table de données $T_n$ de la borne d'accès radio considérée, la liste des terminaux utilisateurs connectés à partir des paramètres de la puissance radioélectrique reçue par ce terminal utilisateur et des conditions d'accès allouées au terminal utilisateur $TU_1$ constituant le terminal utilisateur candidat. Sur la figure 4a, l'opération de connexion du terminal utilisateur candidat $TU_j$ à la borne d'accès $BA_n$ est représentée par la transaction t1 et l'opération d'actualisation dans la table $T_n$ par l'opération t2.

L'opération d'actualisation t2 précitée peut alors être suivie d'une transaction t3 consistant à transmettre de la borne d'accès radio candidate $BA_c$ vers la base de données réseau NDB la table de données $T_n$ précitée. Cette opération est illustrée par la transaction t3 vers le serveur d'accès large bande BAS puis par la transaction t4 entre le serveur d'accès large bande BAS et la base de données réseau NDB.

Le protocole de connexion consiste ensuite au niveau de la base de données réseau NDB à actualiser les tables de données de cette dernière par mise à jour des paramètres de taux d'occupation $\tau_n$ de la borne d'accès radio candidate, du nombre de terminaux utilisateurs connectés sur cette dernière et de la liste des terminaux utilisateurs connectés sur celle-ci.

Le protocole de connexion proprement dit est suivi par une opération exécutée au niveau de la base de données réseau NDB, cette opération consistant à discriminer la position fonctionnelle du terminal utilisateur candidat $TU_c$ par appartenance de ce dernier à la liste des terminaux utilisateurs connectés, la liste $LTU_{co}$ précédemment mentionnés dans la description.

Sur critère d'appartenance du terminal utilisateur candidat $TU_j$, liste précitée, le protocole de connexion est suivi par une opération consistant à transmettre de la base de données réseau NDB vers la borne d'accès radio candidate un message de notification d'appel du terminal utilisateur candidat connecté. Cette opération est représentée par la transaction t6 sur la figure 4a, bien entendu réalisée par l'intermédiaire du serveur à large bande BAS, du circuit collecteur et, bien entendu, de la borne d'accès radio candidate $BA_c = BA_n$.

Au niveau de cette dernière, le protocole de connexion proprement dite est poursuivi par la transmission, vers le terminal utilisateur candidat $TU_j$, d'un message de notification d'appel, cette opération étant illustrée par la transaction t7 sur la figure 4a.

Le protocole de connexion illustré en liaison avec la figure 4a peut être mis en oeuvre lorsqu'en particulier est utilisée une base de données réseau NDB unique.

Il peut également être mis en oeuvre lorsque la base de données réseau NDB, ainsi que représentée en figure 4b, est constituée par une base de données réseau centrale, notée $NDB_c$, interconnectée bien entendu au serveur d'accès à large bande BAS, à laquelle est associée une pluralité de bases de données réseau secondaire notée $NDB_{s1}$ et $NDB_{s2}$ respectivement sur la figure 4b.

On comprend ainsi que la base de données réseau centrale $NDB_c$ et les bases de données réseau secondaire sont interconnectées au serveur d'accès à large bande BAS par un réseau et peuvent donc être localisées à des endroits quelconques.

Toutefois, et selon un aspect remarquable du système de gestion des ressources d'un réseau mobile à large bande conforme à l'objet de la présente invention, on indique qu'à chaque base de données réseau secondaire est associé avantageusement un sous-ensemble de bornes d'accès radio, les sous-ensembles de bornes d'accès radio étant disjoints, ainsi que représentés notamment en figure 4c.

Sur la figure 4c précitée, on a représenté, de la même manière que dans le cas de la figure 4b, un système de gestion des ressources d'un réseau à large bande, conforme à l'objet de la présente invention, comportant une base de données réseau centrale $NDB_c$ et une première et une deuxième base de données réseau secondaire $NDB_{s1}$ et $NDB_{s2}$. Sur La figure 4c, les bornes d'accès radio différentes sont représentées par une croix afin d'alléger la représentation.

En référence à la figure 4c, un premier sous-ensemble de bornes d'accès radio $BA_{11}$, $BA_{12}$ et $BA_{1n}$ est réputé constituer un premier sous-ensemble de bornes d'accès radio noté $SS_1$.

Un deuxième sous-ensemble de bornes d'accès radio considérées noté $SS_2$ est réputé comprendre les bornes d'accès radio $BA_{21}$, $BA_{22}$ et $BA_{2m}$. Les deux sous-ensembles de bornes d'accès radio $SS_1$ et $SS_2$ sont disjoints car, bien que connectés au même serveur d'accès à large bande BAS, ces derniers sont connectés par l'intermédiaire d'un collecteur noté collecteur 1 respectivement collecteur 2, chacun des sous-ensembles de bornes d'accès radio $SS_1$ et $SS_2$ étant gérés indépendamment par une base de données réseau secondaire, la base de données réseau secondaire $NDB_{s1}$ respectivement la base de données réseau secondaire $NDB_{S2}$. Toutefois, la base de données réseau centrale $NDB_c$ permet de gérer les ensembles de bornes d'accès radio, et en particulier les sous-ensembles de bornes d'accès radio, par l'intermédiaire des bases de données réseau secondaires précédemment citées.

D'une manière plus spécifique, en raison de l'indépendance de la gestion des sous-ensembles de bornes d'accès radio $SS_1$ et $SS_2$, l'étape consistant à transmettre vers la borne d'accès radio candidate $BA_c$ un message de notification d'appel du terminal utilisateur connecté $TU_c$ est alors exécutée entre la base de données secondaire pertinente gérant le sous-ensemble de bornes d'accès radio dans lequel la borne d'accès radio candidate $BA_c$ est intégrée.

Le protocole de connexion objet de la présente invention permet toutefois, en référence à la figure 4c, de gérer le processus de sélection de toute borne d'accès radio candidate $BA_c$ de la manière la plus souple lorsque, en particulier, le terminal utilisateur candidat $TU_c$ est susceptible d'être pris en charge par l'un ou l'autre des sous-ensembles $SS_1$ et $SS_2$ de bornes d'accès radio disjointes.

Cette situation se produit lorsque, pour un terminal utilisateur candidat $TU_c$ tel que représenté en figure 4c, ce dernier requiert un accès à une application et à une connexion vis-à-vis d'un premier sous-ensemble de bornes d'accès radio et lorsque le terminal utilisateur candidat précité est en vision directe d'au moins une borne d'accès radio adjacente, distincte du premier sous-ensemble de bornes d'accès radio mais que la ou les bornes d'accès radio adjacentes distinctes appartiennent à un autre, deuxième, sous-ensemble de bornes d'accès radio et, en conséquence gérées par une autre base de données réseau secondaire.

On comprend en particulier que, dans le cas de la figure 4c, le terminal utilisateur candidat $TU_c$ est par exemple susceptible de transmettre sa requête d'accès à la borne d'accès radio $BA_{1n}$, à la borne d'accès radio $BA_{12}$ du premier sous-ensemble de bornes d'accès radio $SS_1$ ainsi qu'aux bornes d'accès radio $BA_{2m}$ et $BA_{22}$ du deuxième sous-ensemble de bornes d'accès radio $SS_2$. On comprend également que, dans ces conditions, l'une des bornes d'accès radio, la borne d'accès radio $BA_{1n}$ est par exemple considérée comme la borne d'accès radio spécifique $BA_s$ pour les bornes d'accès radio concernées par la requête d'accès transmise par le terminal utilisateur candidat $TU_c$.

Dans ces conditions, et conformément à un aspect avantageux du protocole de connexion objet de la présente invention, celui-ci peut consister au moins à former à partir du sous-ensemble de bornes d'accès radio $SS_1$ et de l'autre sous-ensemble de bornes d'accès radio $SS_2$ un sous-ensemble virtuel de bornes d'accès radio VSS constitué par l'union d'une partie des bornes d'accès radio du premier sous-ensemble de bornes d'accès radio $SS_1$ et de bornes d'accès radio adjacentes appartenant à l'autre sous-ensemble de bornes d'accès radio $SS_2$.

En référence à la figure 4c, on indique que le sous-ensemble virtuel de bornes d'accès radio VSS comporte alors avantageusement la borne d'accès radio $BA_{1n}$ considérée par exemple comme la borne d'accès radio spécifique, la borne d'accès radio $BA_{12}$ ainsi que les bornes d'accès radio adjacentes $BA_{2m}$ et $BA_{22}$ appartenant au deuxième sous-ensemble de bornes d'accès radio $SS_2$.

Le protocole de connexion consiste alors à soumettre le terminal utilisateur candidat $TU_c$ à un protocole de connexion à l'une des bornes d'accès radio constitutive du sous-ensemble virtuel de bornes d'accès radio par l'intermédiaire de la base de données réseau secondaire $NDB_{s1}$ et de la deuxième base de données réseau secondaire $NDB_{s2}$ sous le contrôle de la base de données réseau centrale $NDB_c$ et ce, conformément au procédé de gestion des ressources réseau d'un réseau mobile à large bande tel que décrit précédemment dans la description, ce procédé étant maintenant appliqué sur le sous-ensemble virtuel de bornes d'accès radio VSS.

Le processus de constitution des sous-ensembles virtuels de bornes d'accès radio est illustré et décrit de manière non limitative à titre d'exemple en référence à la figure 4d.

Dans la situation de la figure 4c, on dispose :

- du premier sous-ensemble de bornes d'accès radio $SS_1$ représenté par la liste de bornes d'accès radio

$$LBA_1 = [BA_{11}[BA_{12}]...[BA_{1n}]]..]$$

- du deuxième sous-ensemble de bornes d'accès radio $SS_2$ représenté par la liste de bornes d'accès radio

$$LBA_2 = [BA_{21}[BA_{22}]...[BA_{2m}]]..].$$

On dispose également du terminal utilisateur candidat $TU_c$ et des bornes d'accès radio éligibles dans le premier respectivement dans le deuxième sous-ensemble de bornes d'accès radio soit des listes de bornes d'accès radio

$$LBA_{1e} = [BA_{12}[BA_{1n}]]$$

et

$$LBA_{2e} = [BA_{11}[BA_{2m}]].$$

Les bornes d'accès radio éligibles sont les bornes d'accès radio en vision directe du terminal mobile utilisateur $TU_c$ et désignées à l'étape 300 de la figure 4d. Le protocole objet de l'invention consiste à former le sous-ensemble virtuel VSS de bornes d'accès radio à l'étape 301 de la figure 4d par l'établissement d'une sous-liste de bornes d'accès radio du sous-ensemble de bornes d'accès radio, sous-liste constituée par la liste des bornes d'accès radio éligibles du premier sous-ensemble $SS_1$, soit la liste $LBA_{1e}$, et d'une deuxième sous-liste de bornes d'accès radio du deuxième sous-ensemble de bornes d'accès radio $SS_2$ comprenant en fait la liste des bornes d'accès radio éligibles $LBA_{2e}$ du deuxième sous-ensemble de bornes d'accès radio $SS_2$.

A l'étape 301, on procède alors pour réaliser l'union des sous-listes précitées, par la concaténation de la sous-liste $LBA_{1e}$ et de la sous-liste $LBA_{2e}$ pour former une sous-liste résultante de bornes d'accès radio éligibles, $LBA_e$ représentatives du sous-ensemble virtuel de bornes d'accès radio.

Le processus de protocole de connexion peut alors être poursuivi par l'étape 302 correspondant à l'étape C de la figure 2b en retenant comme borne d'accès radio spécifique $BA_s$ la borne $BA_{1n}$ du premier sous-ensemble de bornes d'accès radio $SS_1$ et pour bornes voisines toutes les autres bornes d'accès radio de la liste de bornes d'accès radio $LBA_e$. Bien entendu, la fonction de connexion est appliquée également de la même manière que dans le cas de l'étape C de la figure 2b. La borne d'accès radio candidate retenue est la borne d'accès radio $BA_x$, x appartenant à s,v , ainsi que représentée à l'étape 302 de la figure 4d.

On comprend, en particulier, qu'après l'obtention de la sous-liste résultante $LBA_e$ représentative du sous-ensemble virtuel de bornes d'accès radio SSV, les ordres et messages de commande des borne d'accès radio représentatives de ce dernier mais appartenant au premier respectivement au deuxième sous-ensemble de borne d'accès radio sont transmis pour adressage par l'intermédiaire de chaque base de données réseau secondaire correspondante.

**Revendications**

1. Procédé de gestion des ressources d'un réseau mobile large bande comportant au moins des accès fixes prolongés par un ensemble de bornes d'accès radio de réseau local sans fil et un serveur d'accès à large bande, **caractérisé en ce que**, sur transmission d'une requête d'accès à une application transmise par un terminal mobile utilisateur candidat vers une borne d'accès radio spécifique en vue de la connexion de ce terminal mobile utilisateur candidat à cette borne d'accès radio spécifique, celui-ci consiste au moins à :

   - discriminer, d'une part, le niveau de puissance radioélectrique du signal émis par ladite borne d'accès reçu par le terminal mobile utilisateur candidat, et, d'autre part, les identifiants réseau du terminal mobile utilisateur candidat et de l'application demandée, à partir de ladite requête d'accès ;
   - comparer les identifiants réseau discriminés à des identifiants de référence pour assurer un contrôle d'accès audit réseau mobile large bande ; et, sur réponse positive à l'opération de comparaison ;
   - discriminer à partir d'une liste de référence comportant ladite borne d'accès radio spécifique et au moins une borne d'accès radio voisine à cette borne d'accès radio spécifique, choisies parmi ledit ensemble de bornes d'accès radio, en fonction de la localisation dudit terminal mobile utilisateur candidat vis-à-vis de ladite borne d'accès radio spécifique, de la charge en débit de trafic de chaque borne d'accès radio dudit ensemble de bornes d'accès radio et du type d'application requise, une borne d'accès radio candidate à l'exécution de ladite application, au bénéfice dudit terminal mobile utilisateur candidat, par l'intermédiaire dudit serveur d'accès à large bande;
   et **en ce que**, pour un sous-ensemble de bornes d'accès radio indisponibles sur critère de charge de débit de trafic de celles-ci, ledit sous-ensemble étant formé par ladite borne d'accès radio spécifique et par une pluralité de bornes d'accès radio voisines indisponibles, une pluralité de terminaux mobiles utilisateurs étant connectés à chacune des bornes d'accès radio constituant ledit sous-ensemble de bornes d'accès radio indisponibles, ledit procédé consiste en outre à :
- recalculer les débits de trafic alloués à chaque terminal mobile utilisateur connecté pour au moins l'une des bornes d'accès radio dudit sous-ensemble de bornes d'accès radio indisponibles, en fonction des conditions d'accès et de l'application exécutée par chaque terminal mobile utilisateur connecté, de façon à définir un débit de trafic pondéré susceptible d'être alloué à chaque terminal mobile utilisateur connecté ;
- allouer, à chaque terminal utilisateur connecté, ledit débit de trafic pondéré de façon à dégager, pour ladite borne d'accès radio dudit sous-ensemble de bornes d'accès radio indisponibles, des ressources de transmission en termes de débit de trafic autorisant la transmission de ladite requête d'accès et l'exécution de ladite application au bénéfice dudit terminal mobile utilisateur candidat..

2. Procédé selon la revendication 1, **caractérisé en ce que** l'étape consistant à recalculer les débits de trafic alloués à chaque terminal utilisateur connecté comprend au moins :

- l'attribution, à chaque terminal mobile utilisateur connecté, d'un coefficient de priorité de transmission, en fonction des conditions d'accès et de l'application exécutée ;
- la pondération du débit de trafic alloué à chaque terminal mobile connecté, en fonction du coefficient de priorité de transmission alloué.

3. Procédé selon l'une des revendications 1 et 2, **caractérisé en ce que** l'étape consistant à discriminer une borne d'accès radio candidate à la transmission de ladite requête d'accès et à l'exécution de ladite application au bénéfice dudit terminal mobile utilisateur candidat est suivie d'une étape de redirection de flux à destination dudit terminal mobile utilisateur candidat exécutée par ledit serveur d'accès à large bande et permettant la connexion dudit terminal mobile utilisateur candidat au réseau mobile large bande et l'exécution de ladite application.

4. Système de gestion des ressources d'un réseau mobile large bande comportant au moins des accès fixes prolongés par un ensemble de bornes d'accès radio de réseau local sans fil et un serveur d'accès à large bande, et comportant en outre, interconnectés audit serveur d'accès à large bande, des moyens de commande de connexion, de transmission conditionnelle de ladite requête d'accès et d'exécution de ladite application au bénéfice dudit terminal mobile utilisateur candidat, lesdits moyens de commande comportant au moins :

- • un module de discrimination, à partir de ladite requête d'accès, des identifiants réseau du terminal mobile utilisateur candidat et d'application demandée par ce terminal utilisateur candidat et de ladite valeur numérique représentative de ladite puissance radioélectrique du signal reçu ;
- • un module décisionnel exécutable comportant au moins :
- •• un module de comparaison des identifiants réseau discriminés à des identifiants de référence, pour assurer un contrôle d'accès audit réseau mobile large bande ; et sur réponse positive dudit module de comparaison,
- •• un module exécutable de discrimination, à partir d'une liste de référence de ladite borne d'accès radio spécifique et d'au moins une borne d'accès radio spécifique, en fonction de la localisation dudit terminal mobile utilisateur candidat vis-à-vis de la borne d'accès radio spécifique, de la charge de débit de trafic de chaque borne d'accès radio dudit ensemble de bornes d'accès radio et du type d'application requis, d'une borne d'accès radio dudit ensemble de bornes d'accès radio, candidate à la transmission de ladite requête d'accès et à l'exécution de ladite application au bénéfice dudit terminal mobile utilisateur candidat, par l'intermédiaire dudit serveur d'accès à large bande,

**caractérisé en ce que** ledit module exécutable de discrimination comporte au moins :

- une base de données réseau, comportant au moins les caractéristiques de chacune des bornes d'accès radio, en termes de charge de débit de transmission et de nombre de terminaux mobiles utilisateurs connectés ;
- un module de calcul de discrimination d'une borne d'accès radio candidate à la transmission de ladite requête d'accès et à l'exécution de ladite application, au bénéfice dudit terminal mobile utilisateur candidat.

5. Système selon la revendication 4, **caractérisé en ce que** ledit module de discrimination des identifiants réseau du terminal mobile utilisateur candidat comporte au moins une base de données utilisateurs comportant les identifiants réseau de référence et les conditions d'accès de chaque terminal mobile utilisateur candidat.

6. Système selon l'une des revendications 4 à 5, **caractérisé en ce que** chaque borne d'accès radio comporte une table de données comportant au moins :

- une liste des identifiants réseau de chaque terminal mobile utilisateur connecté à ladite borne d'accès radio ;
- une liste des terminaux utilisateur en vision directe de ladite borne d'accès radio et de la puissance radioélectrique reçue par chacun desdits terminaux en vision directe de ladite borne d'accès radio;
- une liste des terminaux utilisateur connectés à ladite borne d'accès radio, des conditions d'accès allouées à chacun d'eux et de la puissance radio électrique reçue par chaque terminal utilisateur de la borne d'accès radio à laquelle chacun de ces terminaux utilisateur est connecté ;
- un paramètre de taux d'occupation, en termes de charge de débit, de ladite borne d'accès radio.

7. Système selon l'une des revendications 4 à 6, **caractérisé en ce que** ladite base de données réseau comporte une table de données comportant au moins :

- une liste des caractéristiques radioélectriques des différentes bornes d'accès radio ;
- une liste du taux d'occupation de chaque borne d'accès radio ;
- une liste du nombre de terminaux utilisateur connectés sur chaque borne d'accès radio ;
- une liste des terminaux utilisateur en vision directe de chaque borne d'accès radio ;
- une liste des terminaux utilisateur disposant de conditions d'accès mais non détectés par l'une quelconque des bornes d'accès radio et donc hors réseau.

8. Système selon l'une des revendications 6 ou 7, **caractérisé en ce que** pour la transmission bidirectionnelle de messages d'information entre la base de données réseau et l'une desdites bornes d'accès radio, vers un terminal utilisateur, celui-ci consiste à,

- dans le sens descendant de la base de données réseau vers ladite borne d'accès radio :
- • répertorier et discriminer ledit terminal utilisateur dans la liste des utilisateurs connectés, et, sur réponse positive à la discrimination de connexion dudit terminal utilisateur,
- • transmettre directement ledit message d'information vers ledit terminal utilisateur via ladite borne d'accès radio à laquelle ledit terminal utilisateur discriminé est connecté, sinon, ledit terminal utilisateur n'étant pas en mode connecté,
- • répertorier et discriminer ledit terminal utilisateur dans ladite liste des terminaux utilisateurs non connectés mais, en vision directe d'au moins une borne d'accès radio voisine, et, sur réponse positive de discrimination de connexion potentielle dudit terminal utilisateur candidat à au moins l'une des bornes d'accès voisines,
- • transmettre de la base de données réseau vers au moins l'une desdites bornes d'accès radio voisines ledit message d'information ; et
- • transmettre de l'une au moins desdites bornes d'accès radio voisines, disposant du message d'information, un message de requête de connexion vers ledit terminal utilisateur discriminé, ledit terminal utilisateur discriminé étant alors en mesure de procéder au passage en mode connecté vis-à-vis de ladite borne d'accès radio voisine ; sinon, ledit terminal utilisateur étant répertorié hors réseau,
- • mémoriser ledit message d'information dans ladite base de données réseau en attente du passage dudit terminal utilisateur en mode connecté ou en mode non connecté mais en vision directe d'au moins une borne d'accès radio voisine ; et
- • relancer la procédure en mode connecté respectivement en mode non connecté mais en vision directe d'au moins une borne d'accès radio voisine sur passage dudit terminal utilisateur sur l'un ou l'autre mode ; et
- dans le sens montant, d'une borne d'accès radio vers ladite base de données réseau,
- • transmettre périodiquement des messages d'information contenant les informations contenues dans la table de données de ladite borne d'accès radio.

9. Système selon l'une des revendications 4 à 8, **caractérisé en ce que** pour la transmission bidirectionnelle de messages d'information entre une borne d'accès radio et ledit terminal utilisateur, celle-ci consiste à,

- dans le sens descendant de ladite borne d'accès radio vers ledit terminal utilisateur :
- • transmettre des messages de collecte d'informations relatives aux terminaux utilisateur situés en vision directe de ladite borne d'accès radio, lesdits messages de collecte comprenant la transmission sur chaque terminal utilisateur des informations d'identifiant de terminal utilisateur, de conditions d'accès au réseau et de puissance radioélectrique de réception ; et,
- dans le sens montant de chaque terminal utilisateur vers toute borne d'accès radio en vision directe mais en l'absence de connexion de ce terminal utilisateur vis-à-vis de cette borne d'accès radio :
- • transmettre des messages de requête périodiques auprès de toute borne d'accès radio en vision directe, pour déterminer l'existence de messages d'informations pertinents vis-à-vis dudit terminal utilisateur considéré et mémorisés au niveau de la borne d'accès radio, terminal utilisateur non connecté mais en vision directe, lesdits messages d'information pertinents concernant tout message tel que message vocal, message texte court, courrier électronique, appel en absence ; et sur réponse positive, lors de l'existence d'un message d'information pertinent mémorisé,

- dans le sens descendant de ladite borne radio d'accès vers ledit terminal utilisateur,

- • transmettre de ladite borne d'accès radio vers ledit terminal utilisateur un message de notification de connexion afin que ce dernier soit en mesure soit de répondre à un appel entrant, soit de récupérer l'information pertinente le concernant.

10. Système selon l'une des revendications 4 à 9, **caractérisé en ce que** ladite base de données réseau comprend au moins :

- une base de données réseau centrale ;
- une pluralité de bases de données réseau secondaires, chaque base de données réseau secondaire étant connectée en réseau avec ladite base de données centrale, à chaque base de données secondaire étant associé un sous-ensemble de bornes d'accès radio de l'ensemble des bornes d'accès radio du réseau, les sous-ensembles de bornes d'accès radio formant l'ensemble des bornes d'accès radio constitutives du réseau étant disjoints, ladite base de données réseau centrale permettant de gérer lesdits ensembles de bornes d'accès radio par l'intermédiaire desdites bases de données réseau secondaires.

11. Protocole de connexion d'un terminal utilisateur à un réseau mobile large bande comportant au moins des accès fixes prolongés par un ensemble de bornes d'accès radio de réseau local sans fil, un serveur d'accès à large bande et un système de gestion des ressources de ce réseau selon l'une des revendications 4 à 10, **caractérisé en ce que**, pour un terminal utilisateur relié en mode connecté à une borne d'accès radio candidate constitutive de ce réseau, celui-ci consiste au moins à,

- au niveau de ladite borne d'accès radio candidate :
- • actualiser dans la table de données de ladite borne d'accès radio la liste des terminaux utilisateurs connectés à partir des paramètres de la puissance radioélectrique reçue par ce terminal utilisateur et de conditions d'accès allouées à ce terminal utilisateur ;

- • transmettre de ladite borne d'accès radio spécifique ladite table de données à une base de données réseau ; et, au niveau de ladite base de données réseau,

- • actualiser les tables de données de ladite base de données réseau par mise à jour des paramètres de taux d'occupation de ladite borne d'accès radio spécifique, de nombre de terminaux utilisateurs connectés sur ladite borne d'accès radio spécifique, de liste des terminaux utilisateurs connectés ;

- • discriminer la position fonctionnelle dudit terminal utilisateur par appartenance de ce terminal utilisateur à la liste des terminaux utilisateurs connectés, à la liste des terminaux utilisateurs non connectés mais en vision directe de ladite borne d'accès radio spécifique, à la liste des terminaux utilisateurs hors réseau, et, sur critère d'appartenance dudit terminal utilisateur à la liste des terminaux utilisateurs connectés à ladite borne d'accès radio spécifique,

- • transmettre de la base de données réseau vers la borne d'accès radio candidate un message de notification d'appel du terminal utilisateur connecté ; et,

- au niveau de ladite borne d'accès radio candidate,

- • transmettre vers ledit terminal utilisateur connecté ledit message de notification d'appel.

12. Protocole de connexion selon la revendication 11, **caractérisé en ce que** ladite base de données réseau étant constituée par une base de données réseau centrale à laquelle est associée une pluralité de bases de données réseau secondaires, à chaque base de données réseau secondaire étant associé un sous-ensemble de bornes d'accès radio, lesdits sous-ensembles de bornes d'accès radio étant disjoints, ladite étape consistant à transmettre vers ladite borne d'accès radio candidate un message de notification d'appel du terminal utilisateur connecté est exécutée entre la base de données réseau secondaire et la borne d'accès radio candidate à laquelle cette dernière est associée.

13. Protocole de connexion selon la revendication 11 ou 12, **caractérisé en ce que**, pour un terminal utilisateur candidat à un accès à une application et à une connexion vis-à-vis d'un sous-ensemble de bornes d'accès radio, ledit sous-ensemble de bornes d'accès radio étant associé à une base de données réseau secondaire, ledit terminal utilisateur candidat étant en vision directe d'au moins une borne d'accès radio adjacente distincte de ce sous-ensemble de bornes d'accès radio et appartenant à un autre sous-ensemble de bornes d'accès radio auquel est associée une autre base de données réseau secondaire, ledit protocole de connexion consiste au moins à :

- former à partir de ce sous-ensemble de bornes d'accès radio et de cet autre sous-ensemble de bornes d'accès radio un sous-ensemble virtuel de bornes d'accès radio constitué par l'union d'une partie des bornes d'accès radio de ce sous-ensemble et de bornes d'accès radio adjacentes de cet autre sous-ensemble de borne d'accès radio ;

- soumettre ledit terminal utilisateur candidat à un protocole de connexion à l'une des bornes d'accès radio constitutives dudit sous-ensemble virtuel de bornes d'accès radio, par l'intermédiaire de ladite base de données réseau secondaire et de ladite autre base de données réseau secondaire, sous le contrôle de ladite base de données réseau centrale, conformément au procédé de gestion des ressources d'un réseau mobile large bande, selon l'une des revendications 1 à 3.

**14.** Protocole de connexion selon la revendication 13, **caractérisé en ce que** l'étape consistant à former ledit sous-ensemble virtuel de bornes d'accès radio comprend, au niveau de ladite base de données réseau centrale :

- l'établissement d'une sous-liste des bornes d'accès radio dudit sous-ensemble de bornes d'accès radio et d'une autre sous-liste des bornes d'accès radio dudit autre sous-ensemble de bornes d'accès radio, comprenant ladite au moins une borne d'accès radio adjacente ;
- la concaténation de ladite sous-liste et de ladite autre sous-liste pour former une autre sous-liste résultante de bornes d'accès radio éligibles et représentatives dudit sous-ensemble virtuel de bornes d'accès radio ;
- la transmission à chacune desdites bornes d'accès radio pertinentes constitutives de ce sous-ensemble respectivement de cet autre sous-ensemble des messages d'information et de commande à partir de ladite base de données réseau centrale, par l'intermédiaire de ladite base de données réseau secondaire respectivement de ladite autre base de données réseau secondaire.

Plan ou équipement de commande

SPI   PAS

BAS

INTERNET

Collecteur

$TU_{1,a1}$

$BA_1$

$TU_{2,a1}$

$TU_{3,a2}$

$BA_n$

$BA_2$

$TU_n$

**FIG.1 (art antérieur)**

EP 1 672 846 A1

*FIG.2a*

*FIG.2b*

$$LBA_e = [BA_s : LBA_v]$$
$$TU_c f(LPW, LR, RA_c)$$  — $C_0$

$R_s = R_{smax}$ — $C_1$

$-$ → $BA_c = BA_s$ — $C_{16}$

$+$ → $LBA_e = LBA_v$  $LR_v = [R_2 : [R_4]]$ — $C_2$

$RAR_c < R_{iMAX} - R_i$ — $C_3$

$-$ → $LBA_e = [BA_s : LBA_v]$  $LR = [R_s : [LR_v]]$

$LR = [R_s : LR_v]$  $|R_{iMAX} - R_i| = MAX$  → $ip$ → $BA_{ip}$ — $C_{12}$

$[TU_{ipj}]^J$  $TU_c$ — $C_{13}$

$Calcul$  $[WR_{ipj}]^J$ → $[\tau_{ipj}]^J$ — $C_{14}$

$[WR_{ipj}]^J$  $BA_c = BA_{ip}$ — $C_{15}$

$+$ → $LPW_v = [PW_2 : [PW_4]]$ — $C_4$

$PW_{iMAX} = max(LPW_v)$ — $C_5$

$PW_2 = PW_4$ — $C_6$

$C_7$ → $BA_c = BA_{iMAX}$

$C_8$ → $R_2 \neq R_4$

$-$ → $BA_c = BA_2 ou BA_4$ — $C_{11}$

$+$ → $R_{imin} = min(LR_v)$ → $imin$ — $C_9$

$BA_c = BA_{imin}$ — $C_{10}$

**_FIG.2c_**

$$LBA_e = [BA_s ; LBA_v]$$
$$TU_c \quad f(LW, LR, RA_c) \qquad C_0$$

$$\exists TU_s \leftarrow BA_k \quad | LBA_v? \qquad C_{17}$$

$-$

$+$

$$LR = [R_s : LR_v]$$
$$|R_{iMAX} - R_i| = MAX \qquad C_{12}$$
$$\longrightarrow ip \longrightarrow BA_{ip}$$

$$RA_s \in \overline{RTA}_{ET} \quad RA_c \in RTA \qquad C_{22} \qquad C_{18}$$

$$[TU_{ipj}]^J \qquad C_{13}$$
$$TU_c$$

$$Déconnecter \qquad C_{19}$$
$$TU_s \ de \ BA_k$$

$$Calcul \qquad C_{14}$$
$$[WR_{ipj}]^J \longrightarrow [\tau_{ipj}]^J$$

$$Connecter \qquad C_{20}$$
$$TU_c \longleftarrow BA_k$$

$$[WR_{ipj}]^J \qquad C_{15}$$
$$BA_c = BA_{ip}$$

$$Reconnecter \qquad C_{21}$$
$$TU_s \longleftarrow BA_x$$
$$x \in LBA_{v'}$$

**_FIG.2d_**

$$R_{ij}(RA_j, a_j) \qquad C_{140}$$
$$TU_j$$

$$w_j(RA_j, a_j) \qquad C_{141}$$
$$TU_j \longleftarrow w_j(RA_j, a_j)$$

$$WR_{ij} = R_{ij} \times w_j(RA_j, a_j) \qquad C_{142}$$

**_FIG.2e_**

Plan ou équipement de commande

UDB

RAM

CPU

M₁
M₂
DM
M₃
M₄
M₅

NDB

T_NDB

BAS

Collecteur

BA₁

TU₂

T₁

TU₁

BA_n

TU_n

BA₂

T_n

T₂

**FIG.3a**

EP 1 672 846 A1

$$LTU_{CO}, LTU_{VD}, LTU_{OC}$$
$$IM_j$$

Mémorisation $IM_j$

$TU_j \in [LTU_{co}]?$ —100

$-$

$+$

$TU_j \longleftarrow BA_i$
Transmission directe
$IM_j \longrightarrow TU_j$

101

$TU_j \in [LTU_{vD}]$ —102

$-$

$+$

$LBA_v$

103

Transmission
$IM_j \longrightarrow BA_x [LBA_v]$

104

Transmission
M_NOT
$BA_x \longleftarrow TU_j$

105

**FIG.3b**

**FIG.3c**

**FIG.3d**

Plan ou équipement de commande

UDB

Collecteur

$BA_1$

$TU_2$

t6

t3

BAS

t5

t4

t2

$TU_1$

$BA_n = BA_c$

$BA_2$

NDB

t7

t1

$T_n$

$TU_n$

$T_2$

$T_{NDB}$

$T_1$

**FIG.4a**

EP 1 672 846 A1

EP 1 672 846 A1

Plan ou équipement de commande

UDB

NDB_c

Collecteur

BA_1

TU_2

t6

t3

BAS

t5

t4

t2

NDB_s2

NDB_s1

TU_1

BA_n

BA_2

t7

TU_n

t1

T_NDB

T_n

T_1

T_2

## FIG.4b

Plan ou équipement de commande

UDB

$NDB_c$

$BAS$

$NDB_{s1}$

$NDB_{s2}$

Collecteur 1

Collecteur 2

$BA_{11}$

$BA_{12}$

$BA_{1n}$

$BA_{21}$

$BA_{22}$

$BA_{2m}$

$TU_1$

$TU_2$

$TU_n$

$TU_c$

$SS_1$

$SS_2$

$VSS$

**_FIG.4c_**

EP 1 672 846 A1

$$SS_1 \longrightarrow LBA_1 = [BA_{11} : [BA_{12} : \ldots [BA_{1n}]] \ldots]$$
$$SS_2 \longrightarrow LBA_2 = [BA_{21} : [BA_{22} : \ldots [BA_{2n}]] \ldots]$$
$$TU_c \mid LBA_{1e} = [BA_{12} : [BA_{1n}]] ; LBA_{2e} = [BA_{21} : [BA_{2m}]]$$

$$LBA_{1e} = [BA_{12} : [BA_{1n}]]$$
$$LBA_{2e} = [BA_{22} : [BA_{2n}]]$$

— 300

$NDB_c$

$$LBA_e = LBA_{1e} \cup LBA_{2e}$$
$$= [BA_{12} : [BA_{1n} : [BA_{22} : BA_{2n}]]]$$

— 301

$\left\{ \begin{array}{c} NDB_c \\ NDB_{s1} \\ NDB_{s2} \end{array} \right\}$

Protocole de connexion par
$$BA_c \in LBA_e = [BA_s : [LBA_v]]$$
$$f(LPW, LR, RA_c)$$

— 302
= C Fig.2b

$$BA_c = BA_x ; \quad x \in [s, v]$$

# FIG.4d

**EP 1 672 846 A1**

Office européen
des brevets

**RAPPORT DE RECHERCHE EUROPEENNE**

Numéro de la demande

EP 05 29 2734

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2003/133420 A1 (HADDAD WASSIM) 17 juillet 2003 (2003-07-17) * abrégé * * figures 1,5 * * alinéa [0006] - alinéa [0011] * * alinéa [0034] - alinéa [0041] * * revendications 1-7 * ----- | 4-14 | INV. H04L12/28 H04Q7/38 |
| Y | US 6 327 472 B1 (WESTROOS ANDERS ET AL) 4 décembre 2001 (2001-12-04) * abrégé * * figures 4-6 * * colonne 2, ligne 25 - colonne 6, ligne 15 * ----- | 4-14 | |
| A | US 6 567 665 B1 (KISSEE GREGORY VINCENT) 20 mai 2003 (2003-05-20) * colonne 2, ligne 50 - colonne 3, ligne 17 * * abrégé * ----- | 1-14 | |
| | | | **DOMAINES TECHNIQUES RECHERCHES (IPC)** |
| | | | H04L H04Q |

Le présent rapport a été établi pour toutes les revendications

| Lieu de la recherche | Date d'achèvement de la recherche | Examinateur |
|---|---|---|
| Munich | 20 avril 2006 | Wolf, W |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2734

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2006

| Document brevet cité au rapport de recherche | | | Date de publication | Membre(s) de la famille de brevet(s) | | | Date de publication |
|---|---|---|---|---|---|---|---|
| US | 2003133420 | A1 | 17-07-2003 | GB | 2384391 | A | 23-07-2003 |
| | | | | GB | 2385496 | A | 20-08-2003 |
| US | 6327472 | B1 | 04-12-2001 | AU | 1431700 | A | 29-05-2000 |
| | | | | EP | 1129598 | A1 | 05-09-2001 |
| | | | | JP | 2002530029 | T | 10-09-2002 |
| | | | | SE | 522834 | C2 | 09-03-2004 |
| | | | | SE | 9803855 | A | 12-05-2000 |
| | | | | WO | 0028767 | A1 | 18-05-2000 |
| US | 6567665 | B1 | 20-05-2003 | AUCUN | | | |

EPO FORM P0460

Pour tout renseignement concernant cette annexe : voir Journal Officiel de l'Office européen des brevets, No.12/82